(19) Europäisches Patentamt
European Patent Office
Office européen des brevets

(11) **EP 4 734 360 A1**

(12) **EUROPEAN PATENT APPLICATION**
published in accordance with Art. 153(4) EPC

(43) Date of publication:
**29.04.2026 Bulletin 2026/18**

(21) Application number: **23941835.3**

(22) Date of filing: **22.06.2023**

(51) International Patent Classification (IPC):
**H02P 29/20** (2016.01)

(52) Cooperative Patent Classification (CPC):
**H02P 29/20**

(86) International application number:
**PCT/JP2023/023081**

(87) International publication number:
**WO 2024/261946 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **JTEKT CORPORATION
Kariya-shi, Aichi 448-8652 (JP)**

(72) Inventors:
• **EDAMOTO, Syouma
Kariya-shi, Aichi 448-8652 (JP)**
• **TAMURA, Tsutomu
Kariya-shi, Aichi 448-8652 (JP)**
• **FUCHS, Robert
Kariya-shi, Aichi 448-8652 (JP)**

(74) Representative: **Winter, Brandl - Partnerschaft
mbB
Alois-Steinecker-Straße 22
85354 Freising (DE)**

(54) **MOTOR CONTROL DEVICE**

(57) A motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls drive of an electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using a target virtual spring reaction force according to a lateral position for a reference vehicle position relative to a travel lane as a virtual spring reaction force in the equation of motion at least under a predetermined condition.

FIG. 2

**Description**

TECHNICAL FIELD

The present disclosure relates to a control device for an electric motor for steering angle control.

BACKGROUND ART

Patent Document 1 discloses a motor control device including: an assist torque command value setting unit that generates an assist torque command value using torsion bar torque; a manual steering command value generation unit that generates a manual steering command value using the torsion bar torque and the assist torque command value; an integrated angle command value calculation unit that calculates an integrated angle command value by adding the manual steering command value to an automatic steering command value; and a switching unit that switches, based on a switching signal, first control for controlling an electric motor based only on the assist torque command value and second control for controlling the electric motor based on the integrated angle command value.

Related Art Documents

Patent Documents

Patent Document 1: WO 2023/286169

SUMMARY OF THE INVENTION

Problem to be Solved by the Invention

In the second control described in Patent Document 1, the manual steering command value generation unit generates the manual steering command value using an equation of motion of a reference model of a steering device. The equation of motion of the reference model of the steering device includes a moment of inertia, a virtual spring reaction force, and a virtual damper reaction force. A value obtained by multiplying a spring constant of a virtual spring by a rotational angle of a lower column (manual steering command value) is used as the virtual spring reaction force. Therefore, even if a value according to a lateral position for a reference vehicle position is used as the spring constant, torque according to the reference vehicle position cannot be set as the virtual spring reaction force. Therefore, in the second control described in Patent Document 1, the virtual spring reaction force is a reaction force that depends on situations.

An object of the present disclosure is to provide a motor control device that can set a virtual spring reaction force according to a lateral position for a reference vehicle position at least under a predetermined condition.

Means for Solving the Problem

One embodiment of the present disclosure provides a motor control device that controls drive of an electric motor of a steering device. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using a target virtual spring reaction force according to a lateral position for a reference vehicle position relative to a travel lane as a virtual spring reaction force in the equation of motion at least under a predetermined condition.

With this configuration, the virtual spring reaction force according to the lateral position for the reference vehicle position can be provided to a driver at least under the predetermined condition.

The above and other objects, features, and effects of the present disclosure will become apparent from the following description of an embodiment that will be given with reference to the accompanying drawings.

BRIEF DESCRIPTION OF THE DRAWINGS

[FIG. 1] FIG. 1 is a schematic diagram showing a schematic configuration of an electric power steering system to which a motor control device according to an embodiment of the present disclosure is applied.

[FIG. 2] FIG. 2 is a block diagram illustrating an electrical configuration of a motor control ECU.

[FIG. 3] FIG. 3 is a graph showing an example of setting an assist torque command value $T_{as}$ with respect to torsion bar torque $T_{tb}$.

[FIG. 4] FIG. 4 is a graph showing an example of setting a target virtual spring reaction force $T_{tb,d}(e_l)$ with respect to a lateral deviation $e_l$.

[FIG. 5] FIG. 5 is a schematic diagram showing an example of a reference EPS model.

[FIG. 6] FIG. 6 is a block diagram showing the configuration of a manual steering command value calculation unit.

[FIG. 7] FIG. 7 is a block diagram showing the configuration of an angle control unit.

[FIG. 8] FIG. 8 is a schematic diagram showing an example of the configuration of a physical model of the electric power steering system.

[FIG. 9] FIG. 9 is a block diagram showing the configuration of a disturbance torque estimation unit.

[FIG. 10] FIG. 10 is a schematic diagram showing the configuration of a torque control unit.

[FIG. 11] FIG. 11 is a block diagram showing a first modification and a second modification of the motor control ECU.

[FIG. 12] FIG. 12 is a block diagram showing the configuration of a manual steering command value calculation unit that is used in the first modification of the motor control ECU.

[FIG. 13A] FIG. 13A is part of a flowchart illustrating an operation of an LKA target virtual spring reaction force/weight setting unit.

[FIG. 13B] FIG. 13B is part of the flowchart illustrating the operation of the LKA target virtual spring reaction force/weight setting unit.

[FIG. 14] FIG. 14 is a graph illustrating the operation of the LKA target virtual spring reaction force/weight setting unit.

[FIG. 15] FIG. 15 is a block diagram showing the configuration of a manual steering command value calculation unit that is used in the second modification of the motor control ECU.

[FIG. 16] FIG. 16 is a block diagram showing a third modification of the motor control ECU.

[FIG. 17] FIG. 17 is a graph showing an example of setting an LCA target virtual spring reaction force $T_{tb,d\_LCA}(e_l)$ with respect to the lateral deviation $e_l$ and an initial characteristic of an LKA target virtual spring reaction force $\overline{T}_{tb,d\_LKA}(e_l)$.

[FIG. 18] FIG. 18 is a block diagram showing the configuration of a manual steering command value calculation unit that is used in the third modification of the motor control ECU.

## MODES FOR CARRYING OUT THE INVENTION

[Description of Embodiment of Disclosure]

One embodiment of the present disclosure provides a motor control device that controls drive of an electric motor of a steering device. The motor control device includes: a manual steering command value calculation unit that calculates a manual steering command value using torsion bar torque; an integrated angle command value calculation unit that calculates an integrated angle command value by adding the manual steering command value to an automatic steering command value for driving assistance; and a control unit that controls the drive of the electric motor based on the integrated angle command value. The manual steering command value calculation unit is configured to, in a driving assistance mode, calculate the manual steering command value using an equation of motion of a reference model of the steering device. The manual steering command value calculation unit calculates the manual steering command value using a target virtual spring reaction force according to a lateral position for a reference vehicle position relative to a travel lane as a virtual spring reaction force in the equation of motion at least under a predetermined condition.

With this configuration, the virtual spring reaction force according to the lateral position for the reference vehicle position can be provided to a driver at least under the predetermined condition.

In the one embodiment of the present disclosure, when the driving assistance mode is a lane keeping assist mode for assisting in steering such that the vehicle stays within the travel lane, the manual steering command value calculation unit calculates the manual steering command value using the target virtual spring reaction force according to the lateral position for the reference vehicle position relative to the travel lane as the virtual spring reaction force in the equation of motion.

In the one embodiment of the present disclosure, the driving assistance mode includes the lane keeping assist mode and a driving mode different from the lane keeping assist mode. When transition is made from the driving mode different from the lane keeping assist mode to the lane keeping assist mode, the target virtual spring reaction force is set to match torsion bar torque immediately before the transition is made from the different driving mode to the lane keeping assist mode.

In the one embodiment of the present disclosure, the different driving mode is a lane centering assist mode for assisting in steering such that the vehicle travels at a center of the travel lane. When the reference vehicle position is within a range of a predetermined distance from the center of the travel lane, the driving mode is set to the lane centering assist mode. When the reference vehicle position is outside the range of the predetermined distance from the center of the travel lane, the driving mode is set to the lane keeping assist mode. In the lane centering assist mode, the manual steering command value calculation unit calculates the manual steering command value using a virtual spring reaction force that is set using a spring constant of a virtual spring as the virtual spring reaction force in the equation of motion. When transition is made from the lane centering assist mode to the lane keeping assist mode, the target virtual spring reaction force in the transition is set to match torsion bar torque immediately before the transition.

[Detailed Description of Embodiment of Disclosure]

An embodiment of the present disclosure will be described in detail below with reference to the accompanying drawings.

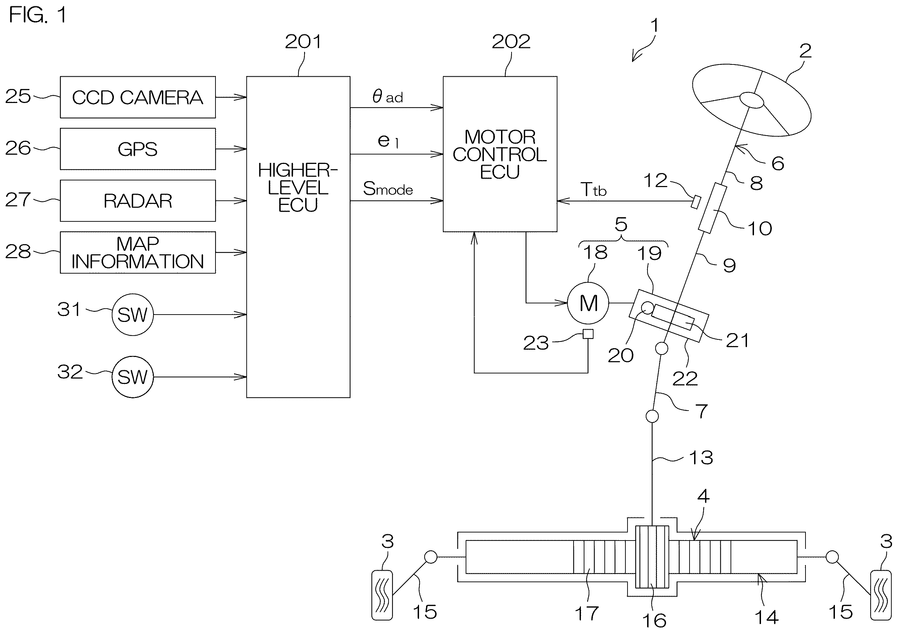

FIG. 1 is a schematic diagram showing a schematic configuration of an electric power steering system to which a motor control device according to an embodiment of the present disclosure is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 to be rotatable relative to each other.

A torque sensor 12 is disposed near the torsion bar 10. The torque sensor 12 detects torsion bar torque (steering torque) $T_{tb}$ applied to the steering wheel 2 based on the amount of relative rotational displacement between the input shaft 8 and the output shaft 9. In the present embodiment, for example, the torsion bar torque $T_{tb}$ that is detected by the torque sensor 12 is such that the torque for steering to the right is detected as a positive value and the torque for steering to the left is detected as a negative value. As the absolute value of the torsion bar torque $T_{tb}$ increases, the magnitude thereof increases.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing.

Hereinafter, the reduction ratio (gear ratio) of the speed reducer 19 is represented by N. The reduction ratio N is defined as a ratio ($\theta_{wg}/\theta_{ww}$) of a worm gear angle $\theta_{wg}$ that is the rotational angle of the worm gear 20 to a worm wheel angle $\theta_{ww}$ that is the rotational angle of the worm wheel 21.

The worm gear 20 is rotationally driven by the electric motor 18. The worm wheel 21 is connected to the output shaft 9 to be rotatable together.

When the worm gear 20 is rotationally driven by the electric motor 18, the worm wheel 21 is rotationally driven such that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 (example of an object to be driven by the electric motor 18) includes motor torque from the electric motor 18 and disturbance torque $T_{lc}$ other than the motor torque. The disturbance torque $T_{lc}$ other than the motor torque includes the torsion bar torque $T_{tb}$, road reaction torque (road load torque) $T_{rl}$, and friction

torque $T_f$.

The torsion bar torque $T_{tb}$ is torque that is applied from the steering wheel 2 side to the output shaft 9 due to a force that is applied to the steering wheel 2 by the driver, a force that is generated by steering inertia, etc.

The road reaction torque $T_{rl}$ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead of the vehicle in the advancing direction, a GPS (Global Positioning System) 26 that detects the position of the vehicle, a radar 27 that detects a road shape and obstacles, and a map information memory 28 that stores map information. The vehicle is further equipped with two mode switches 31, 32 for manually switching steering modes.

As described later, the steering modes include a manual steering mode in which steering is performed by manual driving, and a cooperative steering mode in which steering can be performed based on both manual driving and autonomous driving.

The CCD camera 25, the GPS 26, the radar 27, and the map information memory 28 are connected to a higher-level ECU (ECU: Electronic Control Unit) 201 that performs driving assistance control and autonomous driving control. The higher-level ECU 201 performs surrounding environment recognition, vehicle position estimation, route planning, etc. based on information obtained by the CCD camera 25, the GPS 26, and the radar 27, and the map information, and determines control target values for steering and drive actuators.

In the present embodiment, the higher-level ECU 201 sets an automatic steering command value $\theta_{ad}$ for automatic steering. In the present embodiment, automatic steering control is control for causing the vehicle to travel, for example, along a target travel line. The automatic steering command value $\theta_{ad}$ is a target value of the steering angle for autonomously driving the vehicle along the target travel line.

In the present embodiment, the automatic steering command value $\theta_{ad}$ is expressed as a rotational amount (rotational angle) from a neutral position of the output shaft 9. The rotational amount in a rightward steering direction from the neutral position is expressed as a positive value, and the rotational amount in a leftward steering direction from the neutral position is expressed as a negative value. The automatic steering command value $\theta_{ad}$ is set based on, for example, the vehicle speed, the lateral deviation from the target travel line (lane center line), and the yaw deviation of the vehicle from the target travel line. A process of setting such an automatic steering command value $\theta_{ad}$ is well known, and therefore will not be described in detail herein.

The automatic steering control (driving assistance control) may be, for example, lane keeping assist (LKA) control for assisting in steering such that the vehicle stays within the travel lane, or lane centering assist (LCA) control for assisting in steering such that the vehicle travels at the center of a travel lane.

The higher-level ECU 201 outputs a lateral deviation $e_l$ from a currently set target travel line. In the present embodiment, the lateral deviation $e_l$ is a distance from the currently set target travel line (lane center line) to a reference position of the vehicle (hereinafter referred to as "reference vehicle position"). The reference vehicle position is set as a predetermined position at the width center of the vehicle.

In the present embodiment, the lateral deviation $e_l$ is 0 ($e_l = 0$) when the reference vehicle position is on the target travel line, a positive value ($e_l > 0$) when the reference vehicle position is rightward of the target travel line in the advancing direction, and a negative value ($e_l < 0$) when the reference vehicle position is leftward of the target travel line in the advancing direction.

The higher-level ECU 201 outputs a steering mode signal $S_{mode}$ indicating whether the steering mode (driving mode) is the manual steering mode (manual driving mode) or the cooperative steering mode (driving assistance mode) based on the operation on the first mode switch 31 and the second mode switch 32. Specifically, when the first mode switch 31 is turned ON by the driver, the higher-level ECU 201 outputs the steering mode signal $S_{mode}$ indicating that the steering mode is the manual steering mode. When the second mode switch 32 is turned ON by the driver, the higher-level ECU 201 outputs the steering mode signal $S_{mode}$ indicating that the steering mode is the cooperative steering mode.

The automatic steering command value $\theta_{ad}$, the lateral deviation $e_l$, and the steering mode signal $S_{mode}$ are provided to a motor control ECU 202 via an in-vehicle network. The torsion bar torque $T_{tb}$ detected by the torque sensor 12 and an output signal from the rotational angle sensor 23 are input to the motor control ECU 202. The motor control ECU 202 controls the electric motor 18 based on these input signals and information provided from the higher-level ECU 201.

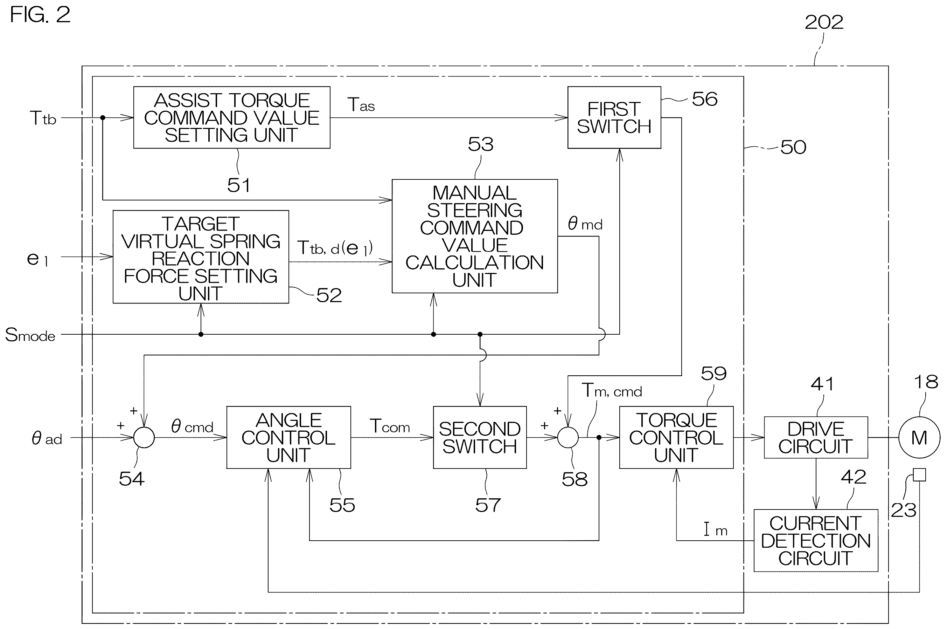

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and supplies electric power to the electric motor 18, and a current detection circuit 42 that detects a current (hereinafter referred to as "motor current $I_m$") that flows through the electric motor 18.

The microcomputer 50 includes a CPU and a memory (such as a ROM, a RAM, and a non-volatile memory), and functions as a plurality of functional processing units by executing a predetermined program. The plurality of functional processing units includes an assist torque command value setting unit 51, a target virtual spring reaction force setting unit 52, a manual steering command value calculation unit 53, an integrated angle command value calculation unit 54, an angle control unit 55, a first switch 56, a second switch 57, an addition unit 58, and a torque control unit (current control unit) 59.

The assist torque command value setting unit 51 sets an assist torque command value $T_{as}$ that is a target value of the assist torque necessary for a manual operation. The assist torque command value setting unit 51 sets the assist torque command value $T_{as}$ based on the torsion bar torque $T_{tb}$ detected by the torque sensor 12.

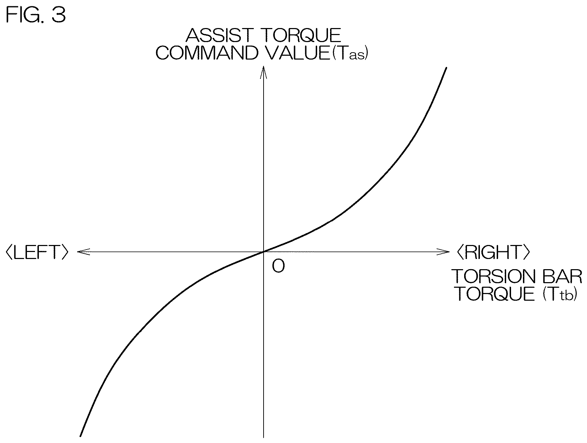

FIG. 3 is a graph showing an example of setting the assist torque command value $T_{as}$ with respect to the torsion bar torque $T_{tb}$.

The assist torque command value $T_{as}$ is set to a positive value when the electric motor 18 should generate a steering assist force for steering to the right, and is set to a negative value when the electric motor 18 should generate a steering assist force for steering to the left. The assist torque command value $T_{as}$ is positive for a positive value of the torsion bar torque $T_{tb}$, and is negative for a negative value of the torsion bar torque $T_{tb}$. The assist torque command value $T_{as}$ is set such that its absolute value increases as the absolute value of the torsion bar torque $T_{tb}$ increases.

The assist torque command value setting unit 51 may calculate the assist torque command value $T_{as}$ by multiplying the torsion bar torque $T_{tb}$ by a preset constant. The assist torque command value $T_{as}$ may be set in consideration of the vehicle speed.

In the cooperative steering mode, the target virtual spring reaction force setting unit 52 sets a target virtual spring reaction force $T_{tb,d}(e_l)$ based on the lateral deviation $e_l$ provided from the higher-level ECU 201.

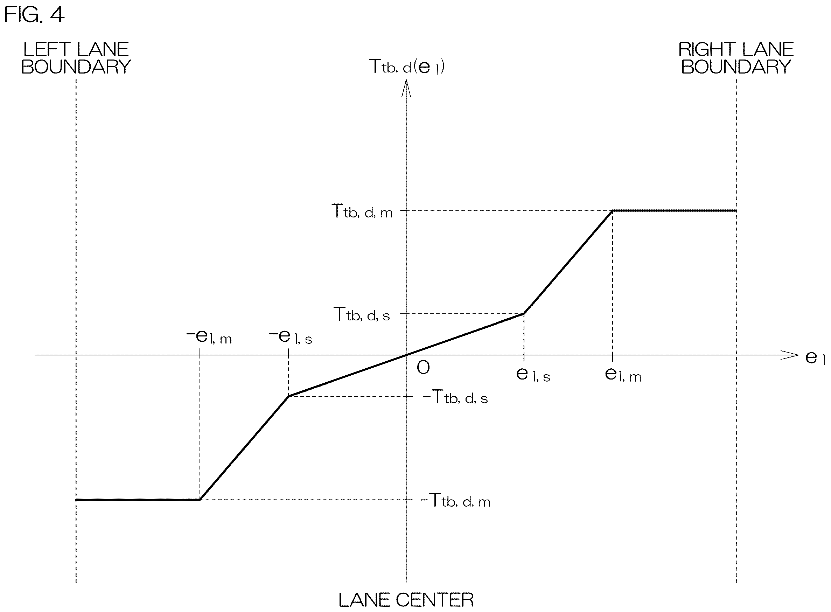

FIG. 4 is a graph showing an example of setting the target virtual spring reaction force $T_{tb,d}(e_l)$ with respect to the lateral deviation $e_l$.

When the lateral deviation $e_l$ ranges from $-e_{l,s}$ ($e_{l,s} > 0$) to $e_{l,s}$, the target virtual spring reaction force $T_{tb,d}(e_l)$ is set to increase from $-T_{tb,d,s}$ ($T_{tb,d,s} > 0$) to $T_{tb,d,s}$ as the lateral deviation $e_l$ increases. In this example, the target virtual spring reaction force $T_{tb,a}(e_l)$ changes linearly, but may change non-linearly.

When the lateral deviation ranges from $e_{l,s}$ to $e_{l,m}$ ($e_{l,m} > e_{l,s}$), the target virtual spring reaction force $T_{tb,d}(e_l)$ is set to increase from $T_{tb,d,s}$ to $T_{tb,d,m}$ ($T_{tb,d,m} > T_{tb,d,s}$) as the lateral deviation $e_l$ increases. The slope of the straight line is set larger than that when the lateral deviation $e_l$ ranges from $-e_{l,s}$ to $e_{l,s}$. In this example, the target virtual spring reaction force $T_{tb,d}(e_l)$ changes linearly, but may change non-linearly. In a range in which the lateral deviation $e_l$ is larger than $e_{l,m}$, the target virtual spring reaction force $T_{tb,d}(e_l)$ is set to $T_{tb,d,m}$.

When the lateral deviation $e_l$ ranges from $-e_{l,s}$ to $-e_{l,m}$ ($-e_{l,m} < -e_{l,s}$), the target virtual spring reaction force $T_{tb,d}(e_l)$ is set to decrease from $-T_{tb,d,s}$ to $-T_{tb,d,m}$ ($-T_{tb,d,m} < -T_{tb,d,s}$) as the lateral deviation $e_l$ decreases. The slope of the straight line is set larger than that when the lateral deviation $e_l$ ranges from $-e_{l,s}$ to $e_{l,s}$. In this example, the target virtual spring reaction force $T_{tb,d}(e_l)$ changes linearly, but may change non-linearly. In a range in which the lateral deviation $e_l$ is smaller than $-e_{l,m}$, the target virtual spring reaction force $T_{tb,d}(e_l)$ is set to $-T_{tb,d,m}$.

The manual steering command value calculation unit 53 is provided to, when the driver operates the steering wheel 2 in the cooperative steering mode, set a steering angle (more exactly, a rotational angle $\theta_c$ of the output shaft 9) according to the steering wheel operation as a manual steering command value $\theta_{md}$. The manual steering command value calculation unit 53 generates the manual steering command value $\theta_{md}$ using the torsion bar torque $T_{tb}$ detected by the torque sensor 12 and the target virtual spring reaction force $T_{tb,d}(e_l)$ set by the target virtual spring reaction force setting unit 52. The manual steering command value calculation unit 53 will be described in detail later.

The integrated angle command value calculation unit 54 calculates an integrated angle command value $\theta_{cmd}$ by adding the manual steering command value $\theta_{md}$ to the automatic steering command value $\theta_{ad}$ set by the higher-level ECU 201.

The angle control unit 55 calculates an integrated motor torque command value $T_{com}$ based on the integrated angle command value $\theta_{cmd}$. The angle control unit 55 will be described in detail later.

The first switch 56 and the second switch 57 are turned ON and OFF in response to the input steering mode signal $S_{mode}$. Specifically, when the steering mode signal $S_{mode}$ indicating that the steering mode is the manual steering mode is input, the first switch 56 is turned ON and the second switch 57 is turned OFF.

When the steering mode signal $S_{mode}$ indicating that the steering mode is the cooperative steering mode is input, the first switch 56 is turned OFF and the second switch 57 is turned ON.

When the first switch 56 is ON and the second switch 57 is OFF, the addition unit 58 outputs the assist torque command value $T_{as}$ as a motor torque command value $T_{m,cmd}$ ($= T_{as}$). When the second switch 57 is ON and the first switch 56 is OFF, the addition unit 58 outputs the integrated motor torque command value $T_{com}$ output from the angle control unit 55 as the motor torque command value $T_{m,cmd}$ ($= T_{com}$).

The motor torque command value $T_{m,cmd}$ that is the output of the addition unit 58 is provided to the torque control unit 59.

The torque control unit 59 drives the drive circuit 41 such that the motor torque of the electric motor 18 is brought closer to the motor torque command value $T_{m,cmd}$. The torque control unit 59 will be described in detail later.

The manual steering command value calculation unit 53 will be described in detail.

First, description will be given of a method for setting the manual steering command value $\theta_{md}$ by the manual steering command value generation unit described in Patent Document 1.

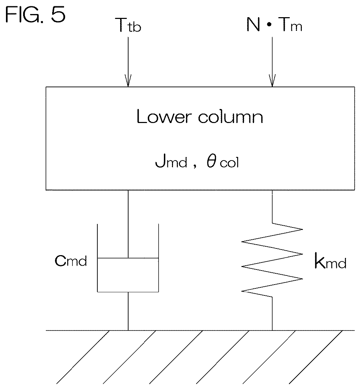

The manual steering command value generation unit generates the manual steering command value $\theta_{md}$ using a reference EPS model in FIG. 5. The reference EPS model in FIG. 5 is an example of "reference model of steering device" according to the present disclosure.

The reference EPS model is a single inertia model including a lower column. The lower column corresponds to the output shaft 9 and the worm wheel 21. However, this model is merely an example, and an inertia model including a component other than the above (e.g., a rack bar) may also be used. In FIG. 5, $J_{md}$ is the inertia of the lower column (hereinafter referred to as "column inertia"), $\theta_{col}$ is the rotational angle of the lower column, and $T_{tb}$ is the torsion bar torque. The torsion bar torque $T_{tb}$, torque $N \cdot T_m$ acting on the output shaft 9 from the electric motor 18, and the road reaction torque (virtual reaction force) $T_{rl}$ are applied to the lower column.

The road reaction torque $T_{rl}$ is given by the following expression (1) using a spring constant $k_{md}$ of a virtual spring and a viscous damping coefficient $c_{md}$ of a virtual damper.

[Math. 1]

$$\mathrm{Trl} = -\mathrm{kmd} \cdot \theta_{\mathrm{col}} - \mathrm{cmd} \cdot \dot{\theta}_{\mathrm{col}} \quad \cdots (1)$$

The spring constant $k_{md}$ and the viscous damping coefficient $c_{md}$ are determined through experiments, analyses, etc. in advance. Hereinafter, $k_{md} \cdot \theta_{col}$ may be referred to as a virtual spring reaction force, and $c_{md}(d\theta_{col}/dt)$ may be referred to as a virtual damper reaction force.

An equation of motion of the reference EPS model is given by the following expression (2).

[Math. 2]

$$\mathrm{Jmd} \cdot \ddot{\theta}_{\mathrm{col}} = \mathrm{Ttb} + \mathrm{N} \cdot \mathrm{Tm} - \mathrm{kmd} \cdot \theta_{\mathrm{col}} - \mathrm{cmd} \cdot \dot{\theta}_{\mathrm{col}} \quad \cdots (2)$$

In the expression (2), $J_{md} \cdot d^2\theta_{col}/dt^2$ is the moment of inertia acting on the lower column.

The manual steering command value generation unit calculates the rotational angle $\theta_{col}$ of the lower column by solving the differential equation given by the expression (2) by substituting the torsion bar torque $T_{tb}$ detected by the torque sensor 12 into $T_{tb}$ and substituting the assist torque command value $T_{as}$ set by the assist torque command value setting unit 51 into $T_m$. The manual steering command value generation unit generates the obtained rotational angle $\theta_{col}$ of the lower column as the manual steering command value $\theta_{md}$. The method of setting the manual steering command value $\theta_{md}$ in this way will be referred to as a comparative method.

The equation of motion given by the expression (2) is equivalent to an equation of motion in which $T_m$ is replaced by $T_{as}$ and $\theta_{col}$ is replaced by $\theta_{md}$.

In the comparative method, a value obtained by multiplying the spring constant $k_{md}$ of the virtual spring by the rotational angle $\theta_{col}$ (manual steering command value $\theta_{md}$) of the lower column is used as the virtual spring reaction force. Therefore, even if a value according to the lateral position for the reference vehicle position is used as the spring constant $k_{md}$, torque according to the lateral position for the reference vehicle position cannot be set as the virtual spring reaction force. For this reason, in a cooperative control mode in the comparative method, the virtual spring reaction force $k_{md} \cdot \theta_{col}$ (= $k_{md} \cdot \theta_{md}$) is a reaction force that depends on situations.

In the present embodiment, the manual steering command value calculation unit 53 calculates the manual steering command value $\theta_{md}$ using the equation of motion (2) of the reference EPS model described above. Specifically, in the present embodiment, the manual steering command value calculation unit 53 calculates the manual steering command value $\theta_{md}$ based on an equation of motion obtained by modifying the equation of motion (2) of the reference EPS model described above.

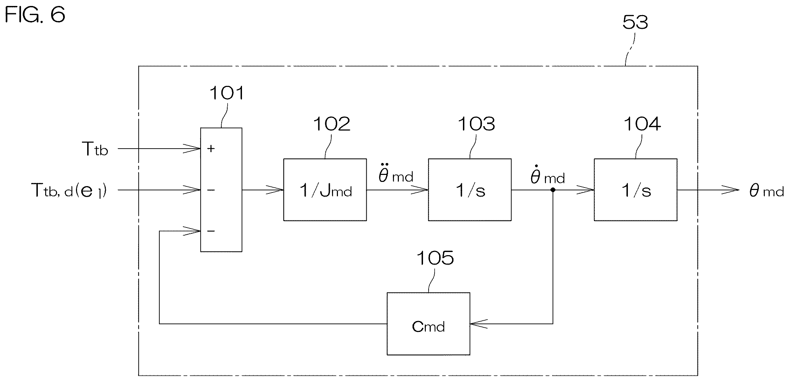

FIG. 6 is a block diagram showing the configuration of the manual steering command value calculation unit 53.

In FIG. 6, $J_{md}$ is the column inertia. s is a differential operator. $\theta_{md}$ is the manual steering command value, and corresponds to the rotational angle $\theta_{col}$ of the lower column in the comparative method. $c_{md}$ is the viscous damping coefficient of the virtual damper, which is determined through experiments, analyses, etc. in advance.

The manual steering command value calculation unit 53 includes an addition/subtraction unit 101, an inertia division unit 102, a first integration unit 103, a second integration unit 104, and a virtual damper reaction force calculation unit 105.

The torsion bar torque $T_{tb}$, the target virtual spring reaction force $T_{tb,d}(e_l)$, and a virtual damper reaction force $c_{md} \cdot d\theta_{md}/dt$ provided from the virtual damper reaction force calculation unit 105 are input to the addition/subtraction unit 101.

The addition/subtraction unit 101 subtracts the target virtual spring reaction force $T_{tb,d}(e_l)$ and the virtual damper reaction force $c_{md} \cdot d\theta_{md}/dt$ from the torsion bar torque $T_{tb}$. Therefore, the addition/subtraction unit 101 calculates a moment of inertia $J_{md} \cdot d^2\theta_{md}/dt^2$ (= $T_{tb} - c_{md} \cdot d\theta_{md}/dt - T_{tb,d}(e_l)$) that corresponds to $J_{md} \cdot d^2\theta_{col}/dt^2$ on the left side of the above expression (2).

The inertia division unit 102 calculates a second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 101 by the column inertia $J_{md}$.

The first integration unit 103 calculates a first derivative $d\theta_{md}/dt$ of the manual steering command value $\theta_{md}$ by integrating the second derivative $d^2\theta_{md}/dt^2$ of the manual steering command value $\theta_{md}$.

The second integration unit 104 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53.

The virtual damper reaction force calculation unit 105 calculates the virtual damper reaction force $c_{md} \cdot d\theta_{md}/dt$ by multiplying the first derivative $d\theta_{md}/dt$ of the manual steering command value $\theta_{md}$ calculated by the first integration unit 103 by the viscous damping coefficient $c_{md}$. The virtual damper reaction force $c_{md} \cdot d\theta_{md}/dt$ is fed back to the addition/subtraction unit 101.

That is, the manual steering command value calculation unit 53 calculates the manual steering command value $\theta_{md}$ based on an equation of motion given by the following expression (3).

[Math. 3]

$$ J_{md} \cdot \ddot{\theta}_{md} = T_{tb} - c_{md} \cdot \dot{\theta}_{md} - T_{tb,d(el)} \quad \cdots (3) $$

In the expression (3), $J_{md} \cdot d^2\theta_{md}/dt^2$ is the moment of inertia. $c_{md} \cdot d\theta_{md}/dt$ is the virtual damper reaction force. $T_{tb,d}(e_l)$ is the target virtual spring reaction force.

In the present embodiment, the manual steering command value calculation unit 53 calculates the manual steering command value $\theta_{md}$ using the target virtual spring reaction force $T_{tb,d}(e_l)$ according to the lateral deviation $e_l$ as the virtual spring reaction force $k \cdot \theta_{md}$ in the equation of motion given by the above expression (2) while setting 0 as $N \cdot T_m$ (= $N \cdot T_{as}$) in the equation of motion given by the above expression (2).

The manual steering command value calculation unit 53 may calculate $N \cdot T_{as}$ by multiplying the assist torque command value $T_{as}$ by the reduction ratio N, and provide the obtained $N \cdot T_{as}$ to the addition/subtraction unit 101. In this case, the addition/subtraction unit 101 subtracts the virtual damper reaction force $c_{md} \cdot d\theta_{md}/dt$ and the target virtual spring reaction force $T_{tb,d}(e_l)$ from a value obtained by adding $N \cdot T_{as}$ to the torsion bar torque $T_{tb}$. In this case, the manual steering command value calculation unit 53 calculates the manual steering command value $\theta_{md}$ based on the equation of motion in which $N \cdot T_{as}$ is added to the right side of the above expression (3).

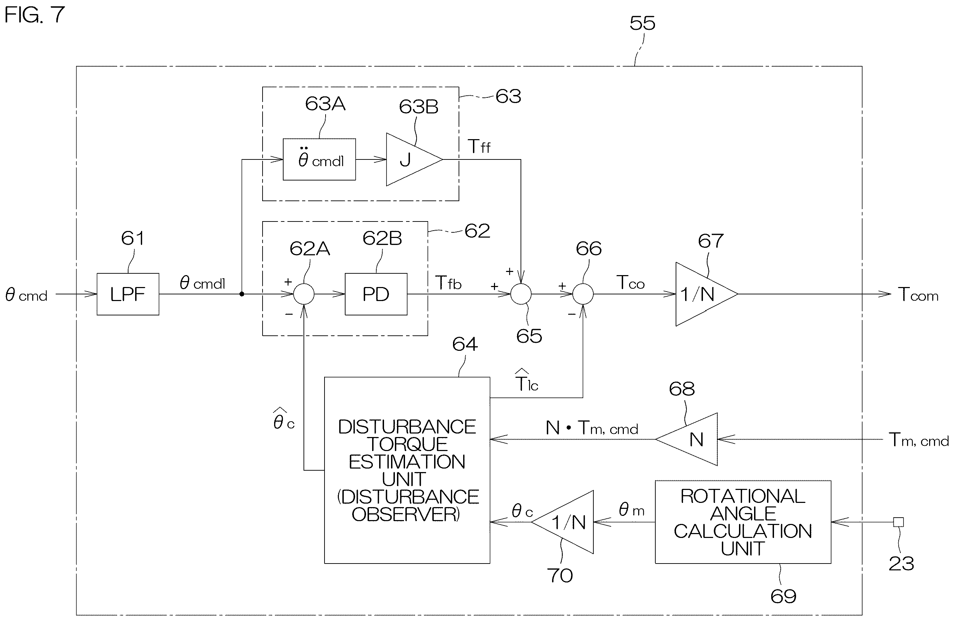

FIG. 7 is a block diagram showing the configuration of the angle control unit 55.

The angle control unit 55 calculates the integrated motor torque command value $T_{com}$ based on the integrated angle command value $\theta_{cmd}$. The angle control unit 55 includes a low-pass filter (LPF) 61, a feedback control unit 62, a feedforward control unit 63, a disturbance torque estimation unit 64, a torque addition unit 65, a disturbance torque compensation unit 66, a first reduction ratio division unit 67, a reduction ratio multiplication unit 68, a rotational angle calculation unit 69, and a second reduction ratio division unit 70.

The reduction ratio multiplication unit 68 converts the motor torque command value $T_{m,cmd}$ calculated by the addition unit 58 (see FIG. 2) into an output shaft torque command value $N \cdot T_{m,cmd}$ that acts on the output shaft 9 (worm wheel 21) by multiplying the motor torque command value $T_{m,cmd}$ by the reduction ratio N of the speed reducer 19.

The rotational angle calculation unit 69 calculates a rotor rotational angle $\theta_m$ of the electric motor 18 based on an output signal from the rotational angle sensor 23. The second reduction ratio division unit 70 converts the rotor rotational angle $\theta_m$ calculated by the rotational angle calculation unit 69 into a rotational angle (actual steering angle) $\theta_c$ of the output shaft 9 by dividing the rotor rotational angle $\theta_m$ by the reduction ratio N.

In the present embodiment, the actual steering angle $\theta_c$ is expressed as a rotational amount (rotational angle) from the neutral position of the output shaft 9. The rotational amount in the rightward steering direction from the neutral position is expressed as a positive value, and the rotational amount in the leftward steering direction from the neutral position is expressed as a negative value.

The low-pass filter 61 performs a low-pass filtering process on the integrated angle command value $\theta_{cmd}$. An integrated angle command value $\theta_{cmdl}$ after the low-pass filtering process is provided to the feedback control unit 62 and the feedforward control unit 63. The low-pass filter 61 may be omitted.

The feedback control unit 62 is provided to bring an estimated steering angle value $\square\theta$ calculated by the disturbance torque estimation unit 64 closer to the integrated angle command value $\theta_{cmdl}$ after the low-pass filtering process. The feedback control unit 62 includes an angle deviation calculation unit 62A and a PD control unit 62B. The angle deviation calculation unit 62A calculates a deviation $\Delta\theta$ (= $\theta_{cmdl}$ - $\square\theta_c$) between the integrated angle command value $\theta_{cmdl}$ and the estimated steering angle value $\square\theta_c$. The angle deviation calculation unit 62A may calculate, as the angle deviation $\Delta\theta$, a deviation ($\theta_{cmdl}$ - $\theta_c$) between the integrated angle command value $\theta_{cmdl}$ and the actual steering angle $\theta_c$ calculated by the second reduction ratio division unit 70.

The PD control unit 62B calculates feedback control torque $T_{fb}$ by performing PD calculation (proportional-derivative calculation) for the angle deviation $\Delta\theta$ calculated by the angle deviation calculation unit 62A. The feedback control torque $T_{fb}$ is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration $d^2\theta_{cmdl}/dt^2$ by obtaining the second derivative of the integrated angle command value $\theta_{cmdl}$.

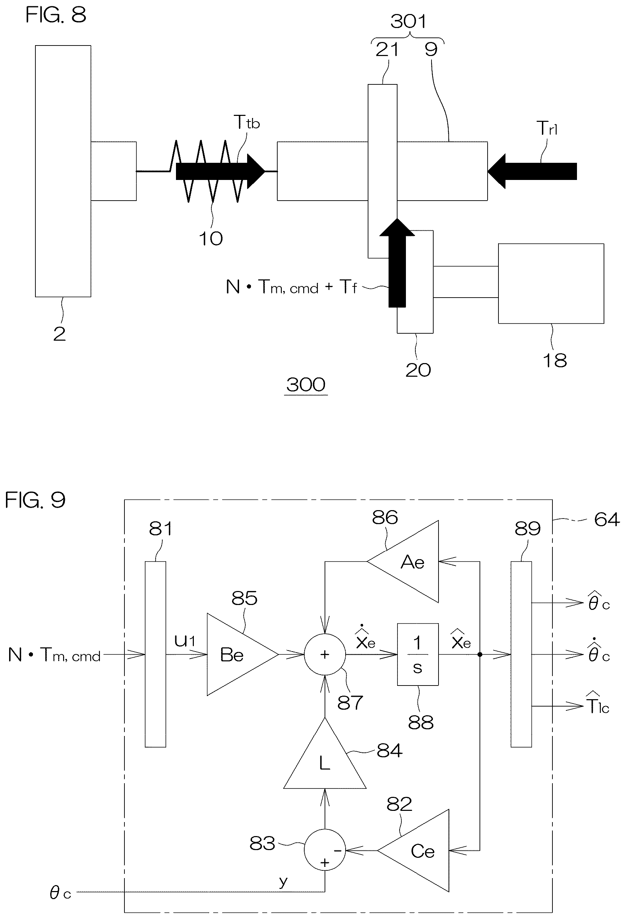

The inertia multiplication unit 63B calculates feedforward control torque $T_{ff}$ ($= J \cdot d^2\theta_{cmdl}/dt^2$) by multiplying the target angular acceleration $d^2\theta_{cmdl}/dt^2$ calculated by the angular acceleration calculation unit 63A by inertia J of the electric power steering system 1. The inertia J is obtained from, for example, a physical model of the electric power steering system 1 (see FIG. 8) described later. The feedforward control torque $T_{ff}$ is provided to the torque addition unit 65 as an inertia compensation value.

The torque addition unit 65 calculates a basic torque command value ($T_{fb} + T_{ff}$) by adding the feedforward control torque $T_{ff}$ to the feedback control torque $T_{fb}$.

The disturbance torque estimation unit 64 is provided to estimate non-linear torque (disturbance torque: torque other than the motor torque) that is generated as disturbance in a plant (object to be controlled by the electric motor 18). The disturbance torque estimation unit 64 estimates the disturbance torque (disturbance load) $T_{lc}$, the steering angle 0, and a steering angle derivative (angular velocity) $d\theta_c/dt$ based on the output shaft torque command value $N \cdot T_{m,cmd}$ and the actual steering angle $\theta_c$. The estimated values of the disturbance torque $T_{lc}$, the steering angle $\theta_c$, and the steering angle derivative (angular velocity) $d\theta_c/dt$ are represented by $\square T_{lc}$, $\square\theta_c$, and $d\square\theta_c/dt$, respectively. The disturbance torque estimation unit 64 will be described in detail later.

The estimated disturbance torque value $\_\!\rfloor T_{lc}$ calculated by the disturbance torque estimation unit 64 is provided to the disturbance torque compensation unit 66 as a disturbance torque compensation value. The estimated steering angle value $\_\!\rfloor\theta_c$ calculated by the disturbance torque estimation unit 64 is provided to the angle deviation calculation unit 62A.

The disturbance torque compensation unit 66 calculates an integrated torque command value $T_{co}$ ($= T_{fb} + T_{ff} - \square T_{lc}$) by subtracting the estimated disturbance torque value $\_\!\rfloor T_{lc}$ from the basic torque command value ($T_{fb} + T_{ff}$). The integrated torque command value $T_{co}$ (torque command value for the output shaft 9) with the disturbance torque compensated for is thus obtained.

The integrated torque command value $T_{co}$ is provided to the first reduction ratio division unit 67. The first reduction ratio division unit 67 calculates the integrated motor torque command value $T_{com}$ (torque command value for the electric motor 18) by dividing the integrated torque command value $T_{co}$ by the reduction ratio N. The integrated motor torque command value $T_{com}$ is provided to the second switch 57 (see FIG. 2).

The disturbance torque estimation unit 64 will be described in detail. The disturbance torque estimation unit 64 is a disturbance observer that estimates the disturbance torque $T_{lc}$, the steering angle $\theta_c$, and the angular velocity $d\theta_c/dt$ using, for example, a physical model 300 of the electric power steering system 1 shown in FIG. 8.

The physical model 300 includes a plant (example of an object to be driven by the motor) 301 that includes the output shaft 9 and the worm wheel 21 fixed to the output shaft 9. The torsion bar torque $T_{tb}$ is applied from the steering wheel 2 to the plant 301 via the torsion bar 10, and the road reaction torque $T_{rl}$ is applied from the steered wheel 3 side to the plant 301.

Moreover, the output shaft torque command value $N \cdot T_{m,cmd}$ is applied to the plant 301 via the worm gear 20, and the friction torque $T_f$ is applied to the plant 301 due to the friction between the worm wheel 21 and the worm gear 20.

An equation of motion for the inertia of the physical model 300 is given by the following expression (4), where J is the inertia of the plant 301.

[Math. 4]

$$J\ddot{\theta}_c = N \cdot T_{m,cmd} + T_{lc} \quad \cdots (4)$$
$$T_{lc} = T_{tb} + T_{rl} + T_f$$

$d^2\theta_c/dt^2$ is the angular acceleration of the plant 301. N is the reduction ratio of the speed reducer 19. $T_{lc}$ represents the disturbance torque other than the motor torque that is applied to the plant 301. While the disturbance torque $T_{lc}$ is shown as the sum of the torsion bar torque $T_{tb}$, the road reaction torque $T_{rl}$, and the friction torque $T_f$ in the present embodiment, the disturbance torque $T_{lc}$ actually includes torque other than these.

An equation of state for the physical model 300 in FIG. 8 is given by the following expression (5).

[Math. 5]

$$\begin{cases} \dot{x} = Ax + B_1u_1 + B_2u_2 \\ y = Cx + Du_1 \end{cases} \quad \cdots (5)$$

In the above expression (5), x is a state variable vector, $u_1$ is a known input vector, $u_2$ is an unknown input vector, and y is an output vector (measured value). In the above expression (5), A is a system matrix, $B_1$ is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is given by the following expression (6).

[Math. 6]

$$\begin{cases} \dot{x}_e = A_e x_e + B_e u_1 \\ y = C_e x_e \end{cases} \quad \cdots (6)$$

In the above expression (6), $x_e$ is a state variable vector of the extended system, and is given by the following expression (7).

[Math. 7]

$$x_e = \begin{bmatrix} x \\ u_2 \end{bmatrix} \quad \cdots (7)$$

In the above expression (6), $A_e$ is a system matrix of the extended system, $B_e$ is a known input matrix of the extended system, and $C_e$ is an output matrix of the extended system.

A disturbance observer (extended state observer) given by the equation of the following expression (8) is constructed from the extended equation of state given by the above expression (6).

[Math. 8]

$$\begin{cases} \dot{\hat{x}}_e = A_e\hat{x}_e + B_e u_1 + L(y - \hat{y}) \\ \hat{y} = C_e\hat{x}_e \end{cases} \quad \cdots (8)$$

In the expression (8), $\hat{x}_e$ represents an estimated value of $x_e$. L is an observer gain. $\hat{y}$ represents an estimated value of y. $\hat{x}_e$ is given by the following expression (9).

[Math. 9]

$$\hat{x}_e = \begin{bmatrix} \hat{\theta}_c \\ \dot{\hat{\theta}}_c \\ \hat{T}_{lc} \end{bmatrix} \quad \cdots (9)$$

In the expression (9), $\hat{\theta}_c$ is an estimated value of $\theta_c$, and $\hat{T}_{lc}$ is an estimated value of $T_{lc}$.

The disturbance torque estimation unit 64 calculates the state variable vector $\hat{x}_e$ based on the equation of the above expression (8).

FIG. 9 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $N \cdot T_{m,cmd}$ calculated by the reduction ratio multiplication unit 68 (see FIG. 7) is provided to the input vector input unit 81. The input vector input unit 81 outputs the input vector $u_1$.

The output of the integration unit 88 is the state variable vector $\hat{x}_e$ (see the above expression (9)). At the start of the calculation, an initial value is given as the state variable vector $\square x_e$. The initial value of the state variable vector $\square x_e$ is, for example, 0.

The system matrix multiplication unit 86 multiplies the state variable vector $\square x_e$ by the system matrix $A_e$. The output matrix multiplication unit 82 multiplies the state variable vector $\square x_e$ by the output matrix $C_e$.

The first addition unit 83 subtracts the output ($C_e \cdot \square x_e$) of the output matrix multiplication unit 82 from the output vector (measured value) y that is the actual steering angle $\theta_c$ calculated by the second reduction ratio division unit 70 (see FIG. 7). That is, the first addition unit 83 calculates the difference (y - $\square$y) between the output vector y and the estimated output vector value $\square$y (= $C_e \cdot \square x_e$). The gain multiplication unit 84 multiplies the output (y - $\square$y) of the first addition unit 83 by the observer gain L (see the above expression (8)).

The input matrix multiplication unit 85 multiplies the input vector $u_1$ output from the input vector input unit 81 by the input matrix $B_e$. The second addition unit 87 calculates a derivative $d\square x_e/dt$ of the state variable vector by adding the output ($B_e \cdot u_1$) of the input matrix multiplication unit 85, the output ($A_e \cdot \square x_e$) of the system matrix multiplication unit 86, and the output (L(y - $\square$y)) of the gain multiplication unit 84. The integration unit 88 calculates the state variable vector $\square x_e$ by integrating the output ($d\square x_e/dt$) of the second addition unit 87. The state variable vector output unit 89 calculates the estimated disturbance torque value $\square T_{lc}$, the estimated steering angle value $\square \theta_c$, and the estimated angular velocity value $d\square\theta_c/dt$ based on the state variable vector $\square x_e$.

Unlike the extended state observer described above, a typical disturbance observer is composed of an inverse model of the plant and a low-pass filter. An equation of motion of the plant is given by the expression (3) as described above. The inverse model of the plant is therefore given by the following expression (10).

[Math. 10]

$$T_{lc} = J\ddot{\theta}_c - N \cdot T_{m,cmd} \qquad \cdots (10)$$

The inputs to the typical disturbance observer are $J \cdot d^2\theta_c/dt^2$ and $N \cdot T_{m,cmd}$. Since the second derivative of the actual steering angle $\theta_c$ is used, noise of the rotational angle sensor 23 has a great influence. The extended state observer according to the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

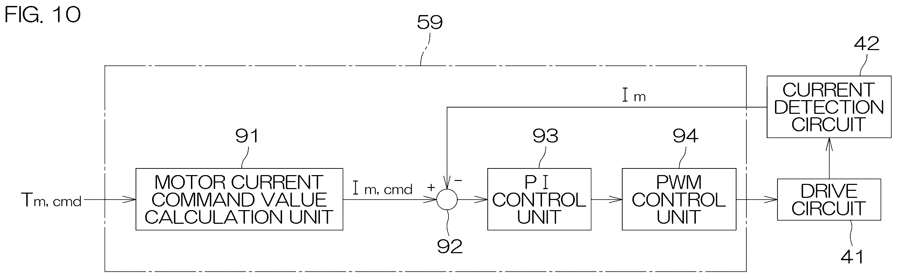

FIG. 10 is a schematic diagram showing the configuration of the torque control unit 59.

The torque control unit 59 (see FIG. 2) includes a motor current command value calculation unit 91, a current deviation calculation unit 92, a PI control unit 93, and a PWM (Pulse Width Modulation) control unit 94.

The motor current command value calculation unit 91 calculates a motor current command value $I_{m,cmd}$ by dividing the motor torque command value $T_{m,cmd}$ calculated by the addition unit 58 (see FIG. 2) by a torque constant $K_t$ of the electric motor 18.

The current deviation calculation unit 92 calculates a deviation $\Delta I$ (= $I_{m,cmd}$ - $I_m$) between the motor current command value $I_{m,cmd}$ obtained by the motor current command value calculation unit 91 and the motor current $I_m$ detected by the current detection circuit 42.

The PI control unit 93 generates a drive command value for controlling the motor current I flowing through the electric motor 18 to the motor current command value $I_{m,cmd}$ by performing PI calculation (proportional-integral calculation) for the current deviation $\Delta I$ calculated by the current deviation calculation unit 92. The PWM control unit 94 generates a PWM control signal with a duty cycle corresponding to the drive command value, and supplies the PWM control signal to the drive circuit 41. Electric power corresponding to the drive command value is thus supplied to the electric motor 18.

The operation of the present embodiment will be described below with reference to FIG. 2.

In the present embodiment, the manual steering mode refers to a steering mode in which the electric motor 18 is controlled based only on the assist torque command value $T_{as}$. The cooperative steering mode refers to a steering mode in which the electric motor 18 is controlled based on the integrated angle command value $\theta_{cmd}$ obtained by considering both the automatic steering command value $\theta_{ad}$ and the manual steering command value $\theta_{md}$.

When the steering mode is set to the manual steering mode, the first switch 56 is ON and the second switch 57 is OFF. When the steering mode is set to the cooperative steering mode, the first switch 56 is OFF and the second switch 57 is ON. That is, the motor control ECU 202 can switch the steering mode between the manual steering mode and the cooperative steering mode by the driver's operation on the mode switches 31, 32.

The switching of the steering mode is performed by the mode switches 31, 32. However, the higher-level ECU 201 may switch the steering mode according to an ON/OFF signal of a driving assistance function or an autonomous driving function, an obstacle(s), a driver's condition, a driver's operation on an accelerator, a brake, etc., and the travel state of the vehicle. In this case, the higher-level ECU 201 generates a mode setting signal according to the ON/OFF signal of the driving assistance function or the autonomous driving function, the obstacle(s), the driver's condition, the driver's operation on the accelerator, the brake, etc., and the travel state of the vehicle, and provides the mode setting signal to the motor control ECU 202.

For example, when the lane keeping assist control for keeping the vehicle within its lane is performed, the higher-level ECU 201 may automatically switch the steering mode as follows.

Referring to FIG. 4, when the lateral deviation $e_l$ is within the range from $-e_{l,s}$ to $e_{l,s}$, the higher-level ECU 201 sets the steering mode to the manual steering mode. Therefore, the first switch 56 is turned ON and the second switch 57 is turned OFF. In this case, the second switch 57 is turned OFF, and thus the target virtual spring reaction force $T_{tb,d}(e_l)$ in the range from $-e_{l,s}$ to $e_{l,s}$ in FIG. 4 is no longer reflected as the steering reaction force.

When the lateral deviation $e_l$ is outside the range from $-e_{l,s}$ to $e_{l,s}$, the higher-level ECU 201 sets the steering mode to the cooperative steering mode. Therefore, the second switch 57 is turned ON and the first switch 56 is turned OFF. In this case, the second switch 57 is turned ON, and thus the target virtual spring reaction force $T_{tb,d}(e_l)$ outside the range from $-e_{l,s}$ to $e_{l,s}$ in FIG. 4 is reflected as the steering reaction force.

When the steering mode is automatically switched in this way, under the condition that the lateral deviation $e_l$ is outside the range from $-e_{l,s}$ to $e_{l,s}$, the manual steering command value calculation unit 53 calculates the manual steering command value $\theta_{md}$ using the target virtual spring reaction force $T_{tb,d}(e_l)$ according to the lateral deviation $e_l$ as the virtual spring reaction force $k \cdot \theta_{md}$ in the equation of motion given by the above expression (2).

In the above embodiment, the steering mode can be switched between the cooperative steering mode in which the electric motor 18 can be controlled based on the integrated angle command value $\theta_{cmd}$ and the manual steering mode in which the electric motor 18 can be controlled based only on the assist torque command value $T_{as}$.

That is, in the electric power steering system 1 that can control the electric motor 18 based on the integrated angle command value $\theta_{cmd}$, the electric motor 18 can be controlled based only on the assist torque command value $T_{as}$.

In the above embodiment, in the manual steering mode, the electric motor 18 is controlled based only on the assist torque command value $T_{as}$. Therefore, the driver can receive the actual road reaction torque.

In the above embodiment, in the cooperative steering mode, the manual steering command value calculation unit 53 calculates the manual steering command value $\theta_{md}$ using the target virtual spring reaction force $T_{tb,d}(e_l)$ according to the lateral deviation $e_l$ as the virtual spring reaction force $k \cdot \theta_{md}$ in the equation of motion given by the above expression (2). Therefore, in the cooperative steering mode, the steering reaction force corresponding to the lateral deviation $e_l$ can be applied to the driver. Thus, the driver can easily recognize the distance from the center of the travel lane or the distance to the lane.

In the above embodiment, the basic torque command value $(T_{fb} + T_{ff})$ is calculated based on the integrated angle command value $\theta_{cmd}$, and the basic torque command value $(T_{fb} + T_{ff})$ is corrected by the estimated disturbance torque value $\hat{T}_{lc}$ calculated by the disturbance torque estimation unit 64. Therefore, the influence of disturbance torque on angle control performance can be reduced. As a result, highly accurate angle control can be implemented.

Modifications of the motor control ECU 202 will be described below. In the following modifications of the motor control ECU 202, the operation in the manual steering mode is the same as in the above embodiment. Therefore, the following description will focus on the operation in the cooperative steering mode.

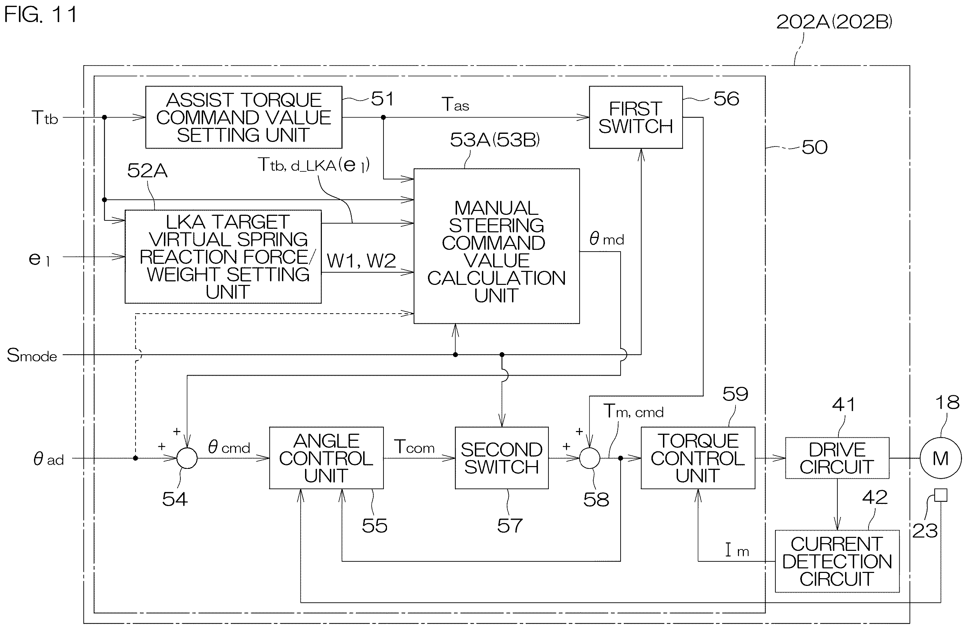

FIG. 11 is a block diagram showing a first modification of the motor control ECU. In FIG. 11, portions corresponding to those in FIG. 2 are represented by the same signs as those in FIG. 2.

The motor control ECU 202A in FIG. 11 is different from the motor control ECU 202 in FIG. 2 in terms of (1) and (2) below.

(1) The configuration of a manual steering command value calculation unit 53A is different from the configuration of the manual steering command value calculation unit 53 in FIG. 2.

(2) An LKA target virtual spring reaction force/weight setting unit 52A (hereinafter referred to as the "reaction force/weight setting unit 52A") is used instead of the target virtual spring reaction force setting unit 52 in FIG. 2.

The reaction force/weight setting unit 52A sets an LKA target virtual spring reaction force $T_{tb,d\_LKA}(e_l)$ for lane keeping assist, and also sets a first weight W1 and a second weight W2 described later. The torsion bar torque $T_{tb}$ is provided to the reaction force/weight setting unit 52A in addition to the lateral deviation $e_l$.

The torsion bar torque $T_{tb}$ and the LKA target virtual spring reaction force $T_{tb,d\_LKA}(e_l)$ set by the reaction force/weight setting unit 52A are provided to the manual steering command value calculation unit 53A. Further, the assist torque command value $T_{as}$ set by the assist torque command value setting unit 51 and the first weight W1 and the second weight W2 set by the reaction force/weight setting unit 52A are provided to the manual steering command value calculation unit 53A.

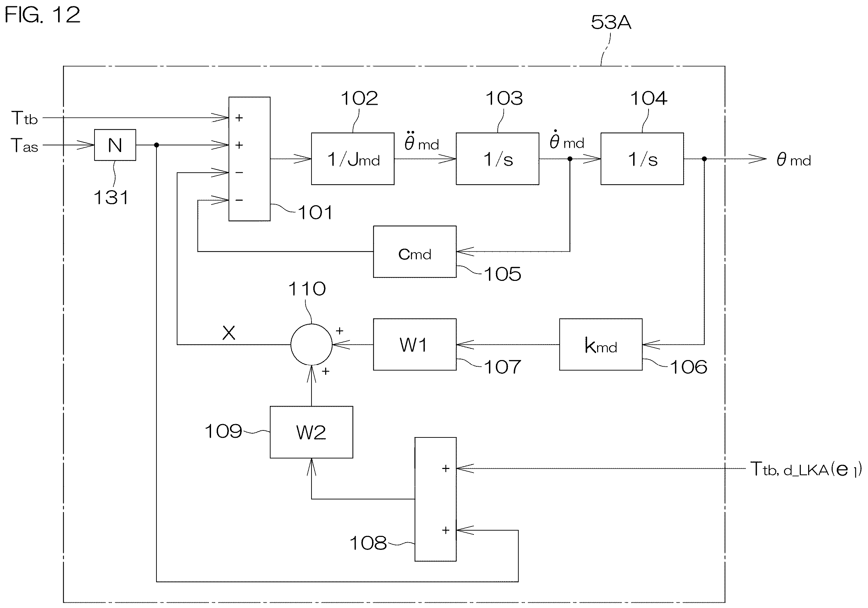

FIG. 12 is a block diagram showing the configuration of the manual steering command value calculation unit 53A. In FIG. 12, portions corresponding to those in FIG. 6 described above are represented by the same signs as those in FIG. 6.

In FIG. 12, $k_{md}$ is the spring constant of the virtual spring, which is determined through experiments, analyses, etc. in advance. $T_{as}$ is the assist torque command value $T_{as}$ set by the assist torque command value setting unit 51.

The manual steering command value calculation unit 53A includes a reduction ratio multiplication unit 131, the addition/subtraction unit 101, the inertia division unit 102, the first integration unit 103, the second integration unit 104, the virtual damper reaction force calculation unit 105, a virtual spring reaction force calculation unit 106, a first weight multiplication unit 107, a first addition unit 108, a second weight multiplication unit 109, and a second addition unit 110.

The reduction ratio multiplication unit 131 converts the assist torque command value $T_{as}$ for a rotary shaft of the electric motor 18 into an assist torque command value $N \cdot T_{as}$ for the output shaft 9 by multiplying the assist torque command value $T_{as}$ by the reduction ratio N of the speed reducer 19. The assist torque command value $N \cdot T_{as}$ for the output shaft 9 calculated by the reduction ratio multiplication unit 131 is provided to the addition/subtraction unit 101 and also to the first addition unit 108.

The torsion bar torque $T_{tb}$, the assist torque command value $N \cdot T_{as}$ for the output shaft 9 calculated by the reduction ratio multiplication unit 131, the virtual damper reaction force $c_{md} \cdot d\theta_{md}/dt$ provided from the virtual damper reaction force calculation unit 105, and an addition result X of the second addition unit 110 are provided to the addition/subtraction unit 101.

The addition/subtraction unit 101 adds the assist torque command value $N \cdot T_{as}$ for the output shaft 9 to the torsion bar torque $T_{tb}$, and subtracts the virtual damper reaction force $\theta_{md} \cdot d\theta_{md}/dt$ and X from the addition result. Therefore, the addition/subtraction unit 101 calculates a moment of inertia $J_{md} \cdot d^2\theta_{md}/dt^2$ ($= T_{tb} + N \cdot T_{as} - c_{md} \cdot d\theta_{md}/dt - X$) that corresponds to $J_{md} \cdot d^2\theta_{col}/dt^2$ on the left side of the above expression (2).

The inertia division unit 102 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 101 by the column inertia $J_{md}$.

The first integration unit 103 calculates the first derivative $d\theta_{md}/dt$ of the manual steering command value $\theta_{md}$ by integrating the second derivative $d^2\theta_{md}/dt^2$ of the manual steering command value $\theta_{md}$.

The second integration unit 104 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53A.

The virtual damper reaction force calculation unit 105 calculates the virtual damper reaction force $c_{md} \cdot d\theta_{md}/dt$ by multiplying the first derivative $d\theta_{md}/dt$ of the manual steering command value $\theta_{md}$ calculated by the first integration unit 103 by the viscous damping coefficient $c_{md}$. The virtual damper reaction force $c_{md} \cdot d\theta_{md}/dt$ is fed back to the addition/subtraction unit 101.

The virtual spring reaction force calculation unit 106 calculates a virtual spring reaction force $k_{md} \cdot \theta_{md}$ by multiplying the manual steering command value $\theta_{md}$ calculated by the second integration unit 104 by the spring constant $k_{md}$.

The first weight multiplication unit 107 multiplies the virtual spring reaction force $k_{md} \cdot \theta_{md}$ by the first weight W1.

The first addition unit 108 adds the assist torque command value $N \cdot T_{as}$ for the output shaft 9 calculated by the reduction ratio multiplication unit 131 to the LKA target virtual spring reaction force $T_{tb,d\_LKA}(e_l)$. The second weight multiplication unit 109 multiplies the calculation result $(T_{tb,d\_LKA}(e_l) + N \cdot T_{as})$ of the first addition unit 108 by the second weight W2.

The second addition unit 110 adds the calculation result $W1 \cdot k_{md} \cdot \theta_{md}$ of the first weight multiplication unit 107 and the calculation result $W2 \cdot (T_{tb,d\_LKA}(e_l) + N \cdot T_{as})$ of the second weight multiplication unit 109. The addition result $\{W1 \cdot k_{md} \cdot \theta_{md} + W2 \cdot (T_{tb,d\_LKA}(e_l) + N \cdot T_{as})\}$ of the second addition unit 110 is fed back as X to the addition/subtraction unit 101.

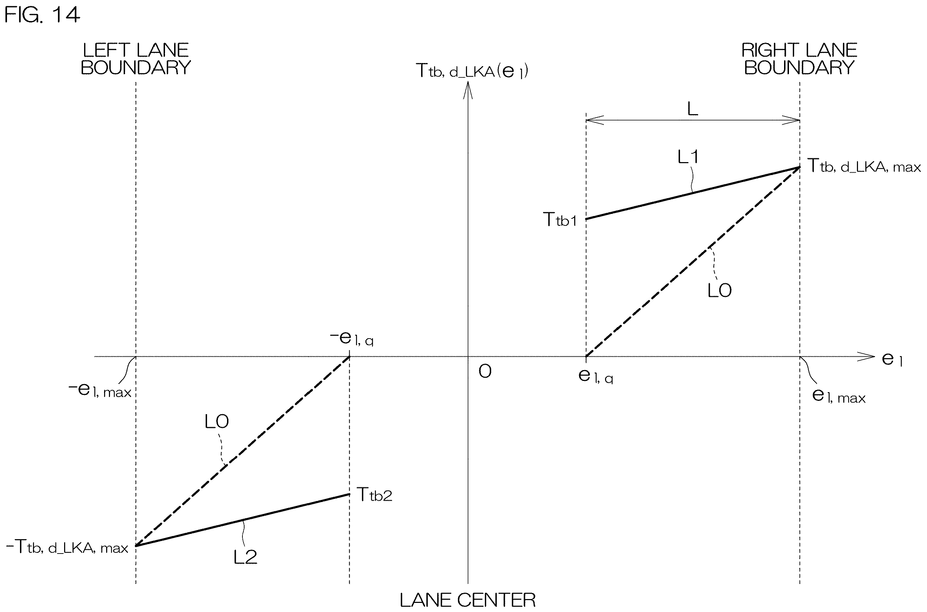

Referring to FIG. 14, $e_{l,q}$ is set to a predetermined value larger than zero and smaller than a half of the width of the travel lane. In the present embodiment, as described later, when the lateral deviation $e_l$ is larger than $-e_{l,q}$ and smaller than $e_{l,q}$, the driving assistance mode is a lane centering assist mode (LCA mode). The first weight W1 is set to 1 and the second weight W2 is set to zero.

When the lateral deviation $e_l$ is equal to or smaller than $-e_{l,q}$ or equal to or larger than $e_{l,q}$, the driving assistance mode is a lane keeping assist mode (LKA mode). The first weight W1 is set to zero and the second weight W2 is set to 1.

In the LCA mode, the addition result X of the second addition unit 110 is $k_{md} \cdot \theta_{md}$. Therefore, the calculation result of the addition/subtraction unit 101 is $(T_{tb} + N \cdot T_{as} - c_{md} \cdot d\theta_{md}/dt - k_{md} \cdot \theta_{md})$.

Accordingly, in the LCA mode, the manual steering command value calculation unit 53A calculates the manual steering command value $\theta_{md}$ based on an equation of motion given by the following expression (11).
[Math. 11]

$$J_{md} \cdot \ddot{\theta}_{md} = T_{tb} + N \cdot T_{as} - c_{md} \cdot \dot{\theta}_{md} - k_{md} \cdot \theta_{md} \quad \cdots (11)$$

In the expression (11), $J_{md} \cdot d^2\theta_{md}/dt^2$ is the moment of inertia. $c_{md} \cdot d\theta_{md}/dt$ is the virtual damper reaction force. $k_{md} \cdot \theta_{md}$ is a virtual spring reaction force corresponding to the virtual spring reaction force $k_{md} \cdot \theta_{col}$ in the above expression (2).

That is, in the LCA mode, the manual steering command value calculation unit 53A calculates the manual steering command value $\theta_{md}$ based on an equation of motion similar to the equation of motion given by the above expression (2).

In the LKA mode, the addition result X of the first addition unit 108 is $(T_{tb,d\_LKA}(e_l) + N \cdot T_{as})$. Therefore, the calculation result of the addition/subtraction unit 101 is $\{T_{tb} - c_{md} \cdot d\theta_{md}/dt - T_{tb,d\_LKA}(e_l)\}$.

Accordingly, in the LKA mode, the manual steering command value calculation unit 53A calculates the manual steering command value $\theta_{md}$ based on an equation of motion given by the following expression (12) similar to the above expression (3).

[Math. 12]

$$ J_{md} \cdot \ddot{\theta}_{md} = T_{tb} - c_{md} \cdot \dot{\theta}_{md} - T_{tb,d\_LKA}(e_l) \qquad \cdots (12) $$

In the expression (12), $J_{md} \cdot d^2\theta_{md}/dt^2$ is the moment of inertia. $c_{md} \cdot d\theta_{md}/dt$ is the virtual damper reaction force. $T_{tb,d\_LKA}(e_l)$ is the LKA target virtual spring reaction force.

That is, in the LKA mode, the manual steering command value calculation unit 53A calculates the manual steering command value $\theta_{md}$ using the LKA target virtual spring reaction force $T_{tb,d\_LKA}(e_l)$ according to the lateral deviation $(e_l)$ as the virtual spring reaction force $k_{md} \cdot \theta_{col}$ in the above expression (2) while setting 0 as $N \cdot T_m (= N \cdot T_{as})$ in the equation of motion given by the above expression (2).

The manual steering command value calculation unit 53A may be configured not to provide $N \cdot T_{as}$ to the first addition unit 108. In this case, in the LKA mode, the manual steering command value calculation unit 53A calculates the manual steering command value $\theta_{md}$ based on the equation of motion in which $N \cdot T_{as}$ is added to the right side of the above expression (12).

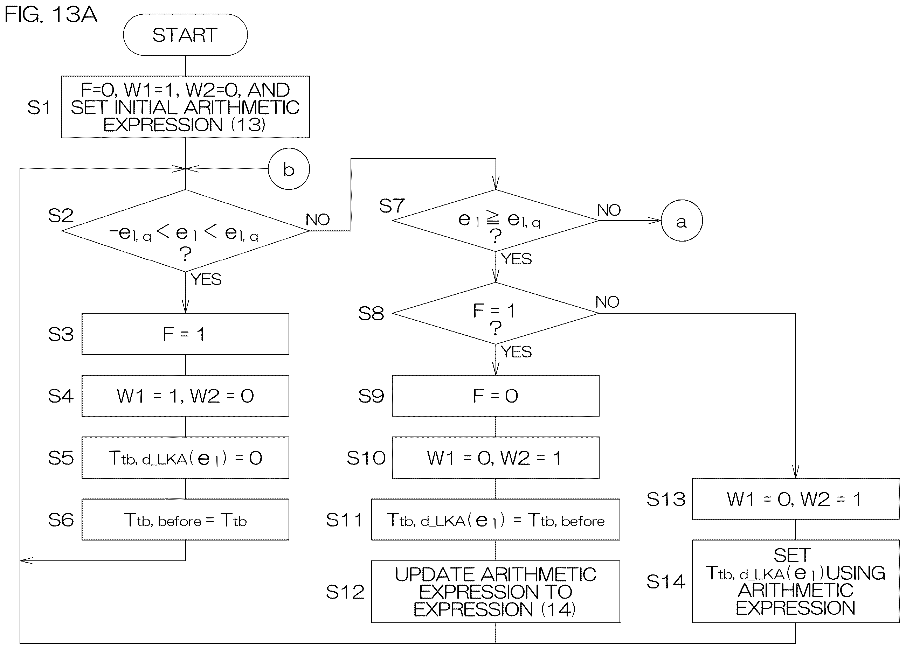

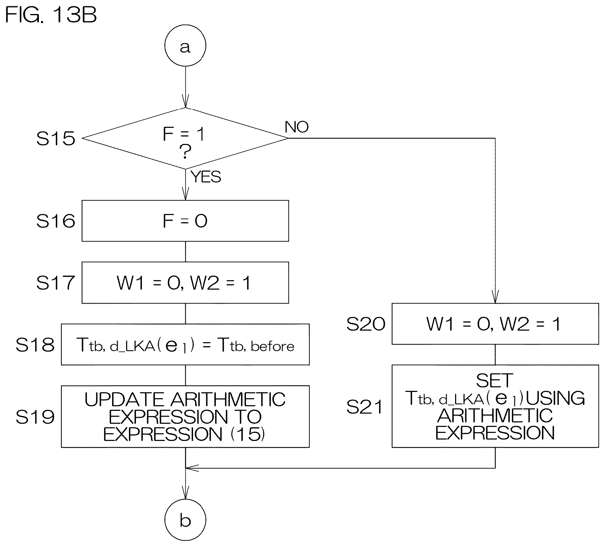

FIGS. 13A and 13B are flowcharts illustrating the operation of the reaction force/weight setting unit 52A.

When the power is turned ON, the reaction force/weight setting unit 52A performs initial settings (step S1). Specifically, the reaction force/weight setting unit 52A resets (F = 0) a flag F for storing information indicating whether the driving assistance mode is the LCA mode or the LKA mode. The reaction force/weight setting unit 52A sets the first weight W1 to 1 and the second weight W2 to 0.

The reaction force/weight setting unit 52A sets an initial arithmetic expression or a map storing initial characteristics for calculating the LKA target virtual spring reaction force $T_{tb,d\_LKA}(e_l)$ in the LKA mode. In the present modification, the initial arithmetic expression is set. The initial arithmetic expression may be stored in a preset memory.

The flag F is set (F = 1) when the driving assistance mode is the LCA mode, and is reset (F = 0) when the driving assistance mode is the LKA mode.

The method for calculating the initial arithmetic expression will be described below.

The dashed line L0 in FIG. 14 is a schematic diagram showing the initial characteristic of the LKA target virtual spring reaction force $T_{tb,d\_LKA}(e_l)$.

In the case where the lateral deviation $(e_l)$ is equal to or larger than $e_{l,q}$, the LKA target virtual spring reaction force $T_{tb,d\_LKA}(e_l)$ is set to zero when the lateral deviation $(e_l)$ is $e_{l,q}$, and is set to a maximum value $T_{tb,d\_LKA,max}$ when the lateral deviation $(e_l)$ is $e_{l,max}$ corresponding to a right lane boundary. When the lateral deviation $(e_l)$ ranges from $e_{l,q}$ to $e_{l,max}$, the LKA target virtual spring reaction force $T_{tb,d\_LKA}(e_l)$ is set to increase from 0 to $T_{tb,d\_LKA,max}$ as the lateral deviation $(e_l)$ increases.

In the case where the lateral deviation $(e_l)$ is equal to or smaller than $-e_{l,q}$, the LKA target virtual spring reaction force $T_{tb,d\_LKA}(e_l)$ is set to zero when the lateral deviation $(e_l)$ is $-e_{l,q}$, and is set to $-T_{tb,d\_LKA,max}$ when the lateral deviation $(e_l)$ is $-e_{l,max}$ corresponding to a left lane boundary. When the lateral deviation $(e_l)$ ranges from $-e_{l,q}$ to $-e_{l,max}$, the LKA target virtual spring reaction force $T_{tb,d\_LKA}(e_l)$ is set to decrease from 0 to $-T_{tb,d\_LKA,max}$ as the lateral deviation $(e_l)$ decreases.

Assuming that $\{(e_{l,max} - e_{l,q}) = L\}$, the initial characteristic of the LKA target virtual spring reaction force $T_{tb,d\_LKA}(e_l)$ can be given by the following expression (13).

[Math. 13]

$$ T_{tb,d\_LKA}(e_l) = \{T_{tb,d\_LKA,max} / L\} \cdot (e_l - e_{l,q}) \qquad \cdots (13) $$

Next, the reaction force/weight setting unit 52A determines whether the lateral deviation $e_l$ is within the range of $-e_{l,q} < e_l < e_{l,q}$ (step S2). When the lateral deviation $e_l$ is within the range of $-e_{l,q} < e_l < e_{l,q}$ (step S2: YES), the reaction force/weight setting unit 52A sets the flag F (F = 1) (step S3).

Next, the reaction force/weight setting unit 52A sets the first weight W1 to 1, and sets the second weight W2 to 0 (step S4). Thus, the driving assistance mode is set to the LCA mode.

Next, the reaction force/weight setting unit 52A sets the LKA target virtual spring reaction force $T_{tb,d\_LKA}(e_l)$ to

zero (step S5).

Next, the reaction force/weight setting unit 52A sets the current torsion bar torque $T_{tb}$ as an actual torsion bar torque value $T_{tb,before}$ immediately before transition from the LCA mode to the LKA mode (step S6). Then, the reaction force/weight setting unit 52A returns to step S2.

When determination is made in step S2 that the lateral deviation $e_l$ is outside the range of $-e_{l,q} < e_l < e_{l,q}$ (step S2: NO), the reaction force/weight setting unit 52A determines whether the lateral deviation $e_l$ is equal to or larger than $e_{l,q}$ (step S7).

When the lateral deviation $e_l$ is equal to or larger than $e_{l,q}$ (step S7: YES), the reaction force/weight setting unit 52A determines whether the flag F is set (step S8). When the flag F is set (step S8: YES), the reaction force/weight setting unit 52A resets the flag F (F = 0) (step S9).

Then, the reaction force/weight setting unit 52A sets the first weight W1 to 0, and sets the second weight W2 to 1 (step S10). Thus, the driving assistance mode is switched from the LCA mode to the LKA mode.

The reaction force/weight setting unit 52A sets $T_{tb,before}$ as the LKA target virtual spring reaction force $T_{tb,d\_LKA}$($e_l$) (step S11). $T_{tb,before}$ is the torsion bar torque $T_{tb}$ immediately before the driving assistance mode is switched to the LKA mode.

Next, the reaction force/weight setting unit 52A updates the arithmetic expression for calculating the LKA target virtual spring reaction force $T_{tb,d\_LKA}$($e_l$) (step S12). Specifically, the arithmetic expression for calculating the LKA target virtual spring reaction force $T_{tb,d\_LKA}$($e_l$) is changed to the following expression (14).
[Math. 14]

$$T_{tb,d}(e_l) = \{(T_{tb,d\_LKA,max} - T_{tb,before}) / L\} \cdot (e_l - e_{l,q}) + T_{tb,before}$$

$$\cdots (14)$$

The continuous line L1 in FIG. 14 indicates the characteristic of the LKA target virtual spring reaction force $T_{tb,d\_LKA}$($e_l$) with respect to the changed lateral deviation $e_l$ when $T_{tb,before}$ is $T_{tb1}$ (> 0).

In step S12, the map storing the characteristics of the LKA target virtual spring reaction force $T_{tb,d\_LKA}$($e_l$) with respect to the lateral deviation $e_l$ may be changed instead of changing the arithmetic expression for calculating the LKA target virtual spring reaction force $T_{tb,d\_LKA}$($e_l$).

Then, the reaction force/weight setting unit 52A returns to step S2.

When determination is made in step S8 that the flag F is reset (step S8: NO), the reaction force/weight setting unit 52A sets the first weight W1 to 0, and sets the second weight W2 to 1 (step S13). Thus, the driving assistance mode is set to the LKA mode. When negative determination is made in step S8, the driving assistance mode has already been set to the LKA mode.

Next, the reaction force/weight setting unit 52A sets the LKA target virtual spring reaction force $T_{tb,d\_LKA}$($e_l$) based on the currently set arithmetic expression and the lateral deviation $e_l$ (step S14). Then, the reaction force/weight setting unit 52A returns to step S2.

When determination is made in step S7 that the lateral deviation $e_l$ is not equal to or larger than $e_{l,q}$ (step S7: NO), the reaction force/weight setting unit 52A determines that the lateral deviation $e_l$ is equal to or smaller than $-e_{l,q}$, and determines whether the flag F is set (step S15). When the flag F is set (step S15: YES), the reaction force/weight setting unit 52A resets the flag F (F = 0) (step S16).

Next, the reaction force/weight setting unit 52A sets the first weight W1 to 0, and sets the second weight W2 to 1 (step S17). Thus, the driving assistance mode is switched from the LCA mode to the LKA mode.

The reaction force/weight setting unit 52A sets $T_{tb,before}$ as the LKA target virtual spring reaction force $T_{tb,d\_LKA}$($e_l$) (step S18). $T_{tb,before}$ is the torsion bar torque $T_{tb}$ immediately before the driving assistance mode is switched to the LKA mode.

Next, the reaction force/weight setting unit 52A updates the arithmetic expression for calculating the LKA target virtual spring reaction force $T_{tb,d\_LKA}$($e_l$) (step S19). Specifically, the arithmetic expression for calculating the LKA target virtual spring reaction force $T_{tb,d\_LKA}$($e_l$) is changed to the following expression (15).
[Math. 15]

$$T_{tb,d\_LKA}(e_l) = - \{(-T_{tb,d\_LKA,max} - T_{tb,before}) / L\} \cdot (e_l - e_{l,q}) + T_{tb,before}$$

$$\cdots (15)$$

The continuous line L2 in FIG. 14 indicates the characteristic of the LKA target virtual spring reaction force $T_{tb,d\_LKA}$($e_l$) with respect to the changed lateral deviation $e_l$ when $T_{tb,before}$ is $T_{tb2}$ (< 0).

In step S19, the map storing the characteristics of the LKA target virtual spring reaction force $T_{tb,d\_LKA}(e_l)$ with respect to the lateral deviation $e_l$ may be changed instead of changing the arithmetic expression for calculating the LKA target virtual spring reaction force $T_{tb,d\_LKA}(e_l)$.

Then, the reaction force/weight setting unit 52A returns to step S2.

When determination is made in step S15 that the flag F is reset (step S15: NO), the reaction force/weight setting unit 52A sets the first weight W1 to 0, and sets the second weight W2 to 1 (step S20). Thus, the driving assistance mode is set to the LKA mode. When negative determination is made in step S15, the driving assistance mode has already been set to the LKA mode.

Next, the reaction force/weight setting unit 52A sets the LKA target virtual spring reaction force $T_{tb,d\_LKA}(e_l)$ based on the currently set arithmetic expression and the lateral deviation $e_l$ (step S21). Then, the reaction force/weight setting unit 52A returns to step S2.

In the first modification, when the steering mode is the cooperative steering mode and the lateral deviation $e_l$ is within the range of $-e_{l,q} < e_l < e_{l,q}$, the driving assistance mode is set to the LCA mode. In this case, the manual steering command value calculation unit 53A calculates the manual steering command value $\theta_{md}$ based on the equation of motion (11) including the virtual spring reaction force $k_{md} \cdot \theta_{md}$. Therefore, a steering reaction force for guiding the vehicle to the center of the lane is applied to the driver.

When the lateral deviation $e_l$ is outside the range of $-e_{l,q} < e_l < e_{l,q}$, the driving assistance mode is set to the LKA mode. In this case, the manual steering command value calculation unit 53A calculates the manual steering command value $\theta_{md}$ based on the equation of motion (12) using the LKA target virtual spring reaction force $T_{tb,d\_LKA}(e_l)$ according to the lateral deviation $(e_l)$ as the virtual spring reaction force $k_{md} \cdot \theta_{col}$ in the above expression (2). Therefore, the virtual spring reaction force according to the lateral deviation $e_l$ is applied to the driver. Thus, the driver can easily recognize the distance from the center of the travel lane (distance to the lane).

When the driving assistance mode makes transition from the LCA mode to the LKA mode, the LKA target virtual spring reaction force $T_{tb,d\_LKA}(e_l)$ is set such that the LKA target virtual spring reaction force $T_{tb,d\_LKA}(e_l)$ immediately after the transition matches the torsion bar torque $T_{tb,before}$ immediately before the transition, and the arithmetic expression for the LKA target virtual spring reaction force $T_{tb,d\_LKA}(e_l)$ is updated (see the expressions (14), (15)).

Therefore, the torsion bar torque $T_{tb}$ can be smoothly connected when the driving assistance mode makes transition from the LCA mode to the LKA mode. Thus, it is possible to reduce the occurrence of the case where the steering feel suddenly becomes lighter or the driver feels a shock when transition is made from the LCA mode to the LKA mode.

When the driving assistance mode makes transition from the LCA mode to the LKA mode, the LKA target virtual spring reaction force $T_{tb,d\_LKA}(e_l)$ may be set such that the virtual spring reaction force $T_{tb,d\_LKA}(e_l)$ immediately after the transition matches the virtual spring reaction force $k_{md} \cdot \theta_{md}$ immediately before the transition.

In this case, in step S6 in FIG. 13A, the reaction force/weight setting unit 52A sets a current virtual spring reaction force $k_{md} \cdot \theta_{md}-$ as a virtual spring reaction force $(k_{md} \cdot \theta_{md}-)_{before}$ immediately before the driving assistance mode makes transition from the LCA mode to the LKA mode. In step S11 in FIG. 13A and step S18 in FIG. 13B, the reaction force/weight setting unit 52A sets $(k_{md} \cdot \theta_{md}-)_{before}$ as the LKA target virtual spring reaction force $T_{tb,d\_LKA}(e_l)$.

In step S12 in FIG. 13A, the reaction force/weight setting unit 52A changes the arithmetic expression for calculating the LKA target virtual spring reaction force $T_{tb,d\_LKA}(e_l)$ to the following expression (16).
[Math. 16]

$$T_{tb,d\_LKA}(e_l) = \{(T_{tb,d\_LKA,max} - (k_{md} \cdot \theta_{md})_{before}) / L\} \cdot (e_l - e_{l,q}) + (k_{md} \cdot \theta_{md})_{before} \quad \cdots (16)$$

In step S19 in FIG. 13B, the reaction force/weight setting unit 52A changes the arithmetic expression for calculating the LKA target virtual spring reaction force $T_{tb,d\_LKA}(e_l)$ to the following expression (17).
[Math. 17]

$$T_{tb,d\_LKA}(e_l) = -\{(-T_{tb,d\_LKA,max} - (k_{md} \cdot \theta_{md})_{before}) / L\} \cdot (e_l - e_{l,q}) + (k_{md} \cdot \theta_{md})_{before} \quad \cdots (17)$$

A manual steering command value calculation unit 53B to which the automatic steering command value $\theta_{ad}$ is further input as indicated by the dashed line in FIG. 11 may be used instead of the manual steering command value calculation unit 53A in FIG. 11. Hereinafter, a motor control ECU 202B using the manual steering command value calculation unit 53B instead of the manual steering command value calculation unit 53A will be referred to as a second modification of the motor control ECU.

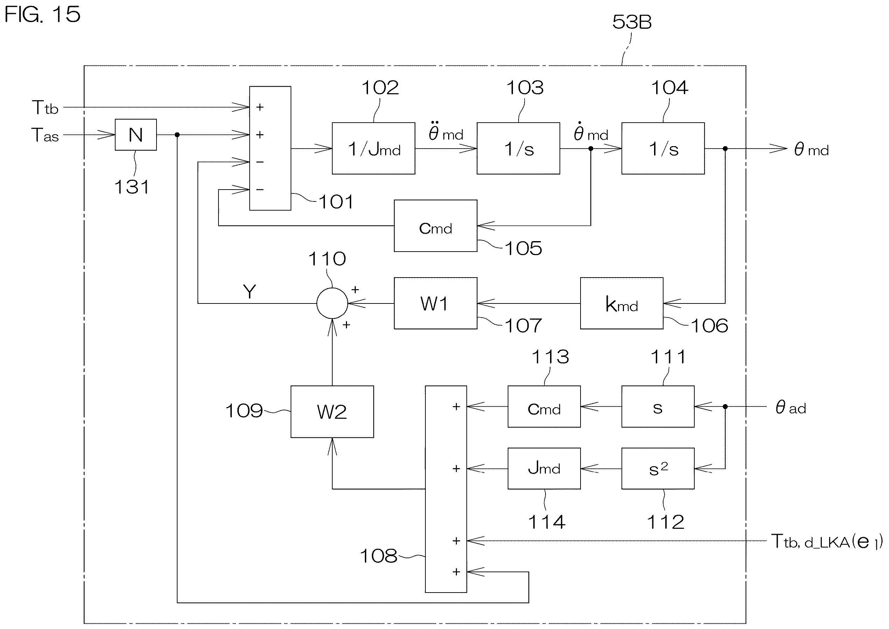

FIG. 15 is a block diagram showing the configuration of the manual steering command value calculation unit 53B.

In FIG. 15, portions corresponding to those in FIG. 12 described above are represented by the same signs as those in FIG. 12.

The manual steering command value calculation unit 53B includes the reduction ratio multiplication unit 131, a first-order differentiation unit 111, a second-order differentiation unit 112, the addition/subtraction unit 101, the inertia division unit 102, the first integration unit 103, the second integration unit 104, the first virtual damper reaction force calculation unit 105, the virtual spring reaction force calculation unit 106, the first weight multiplication unit 107, a second virtual damper reaction force calculation unit 113, an inertia multiplication unit 114, the first addition unit 108, the second weight multiplication unit 109, and the second addition unit 110.

The reduction ratio multiplication unit 131 converts the assist torque command value $T_{as}$ for the rotary shaft of the electric motor 18 into the assist torque command value $N \cdot T_{as}$ for the output shaft 9 by multiplying the assist torque command value $T_{as}$ by the reduction ratio N of the speed reducer 19. The assist torque command value $N \cdot T_{as}$ **for the** output shaft 9 calculated by the reduction ratio multiplication unit 131 is provided to the addition/subtraction unit 101 and also to the first addition unit 108.

The torsion bar torque $T_{tb}$, the assist torque command value $N \cdot T_{as}$ for the output shaft 9, the first virtual damper reaction force $c_{md} \cdot d\theta_{md}/dt$ calculated by the first virtual damper reaction force calculation unit 105, and an addition result Y of the second addition unit 110 are provided to the addition/subtraction unit 101.

The addition/subtraction unit 101 adds the assist torque command value $N \cdot T_{as}$ for the output shaft 9 to the torsion bar torque $T_{tb}$, and subtracts the first virtual damper reaction force $c_{md} \cdot d\theta_{md}/dt$ and Y from the addition result. Therefore, the addition/subtraction unit 101 calculates a moment of inertia $J_{md} \cdot d^2\theta_{md}/dt^2$ (= $T_{tb} + N \cdot T_{as} - c_{md} \cdot d\theta_{md}/dt - Y$) that corresponds to $J_{md} \cdot d^2\theta_{col}/dt^2$ on the left side of the above expression (2).

The inertia division unit 102 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 101 by the column inertia $J_{md}$.

The first integration unit 103 calculates the first derivative $d\theta_{md}/dt$ of the manual steering command value $\theta_{md}$ by integrating the second derivative $d^2\theta_{md}/dt^2$ of the manual steering command value $\theta_{md}$.

The second integration unit 104 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53B.

The first virtual damper reaction force calculation unit 105 calculates the first virtual damper reaction force $c_{md} \cdot d\theta_{md}/dt$ by multiplying the first derivative $d\theta_{md}/dt$ of the manual steering command value $\theta_{md}$ calculated by the first integration unit 103 by the viscous damping coefficient $c_{md}$. The first virtual damper reaction force $c_{md} \cdot d\theta_{md}/dt$ is fed back to the addition/subtraction unit 101.

The virtual spring reaction force calculation unit 106 calculates the virtual spring reaction force $k_{md} \cdot \theta_{md}$ by multiplying the manual steering command value $\theta_{md}$ calculated by the second integration unit 104 by the spring constant $k_{md}$. The first weight multiplication unit 107 multiplies the virtual spring reaction force $k_{md} \cdot \theta_{md}$ by the first weight W1.

The first-order differentiation unit 111 obtains the first derivative of the automatic steering command value $\theta_{ad}$. The second virtual damper reaction force calculation unit 113 calculates a second virtual damper reaction force $c_{md} \cdot d\theta_{ad}/dt$ by multiplying the first derivative $d\theta_{ad}/dt$ of the automatic steering command value $\theta_{ad}$ by the viscous damping coefficient $c_{md}$. The second virtual damper reaction force $c_{md} \cdot d\theta_{ad}/dt$ is a virtual damper reaction force for the automatic steering command value $\theta_{ad}$.

The second-order differentiation unit 112 obtains the second derivative of the automatic steering command value $\theta_{ad}$. The inertia multiplication unit 114 calculates a moment of inertia $J_{md} \cdot d^2\theta_{ad}/dt^2$ for the automatic steering command value $\theta_{ad}$ by multiplying the second derivative $d^2\theta_{ad}/dt^2$ of the automatic steering command value $\theta_{ad}$ by the column inertia $J_{md}$.

The first addition unit 108 adds the moment of inertia $J_{md} \cdot d^2\theta_{ad}/dt^2$ for the automatic steering command value $\theta_{ad}$, the LKA target virtual spring reaction force $T_{tb,d\_LKA}(e_l)$, and the assist torque command value $N \cdot T_{as}$ for the output shaft 9 to the virtual damper reaction force (second virtual damper reaction force) $c_{md} \cdot d\theta_{ad}/dt$ for the automatic steering command value $\theta_{ad}$.

The second weight multiplication unit 109 multiplies the calculation result ($c_{md} \cdot d\theta_{ad}/dt + J_{md} \cdot d^2\theta_{ad}/dt^2 + T_{tb,d\_LKA}(e_l) + N \cdot T_{as}$) of the first addition unit 108 by the second weight W2.

The second addition unit 110 adds the calculation result $W1 \cdot k_{md} \cdot \theta_{md}$ of the first weight multiplication unit 107 and the calculation result $W2 \cdot (c_{md} \cdot d\theta_{ad}/dt + J_{md} \cdot d^2\theta_{ad}/dt^2 + T_{tb,d\_LKA}(e_l) + N \cdot T_{as})$ of the second weight multiplication unit 109. The addition result $\{W1 \cdot k_{md} \cdot \theta_{md} + W2 \cdot (c_{md} \cdot d\theta_{ad}/dt + J_{md} \cdot d^2\theta_{ad}/dt^2 + T_{tb,d\_LKA}(e_l) + N \cdot T_{as})\}$ of the second addition unit 110 is fed back as Y to the addition/subtraction unit 101.

In the present modification, the reaction force/weight setting unit 52A performs the same operation as that described with reference to FIGS. 13A and 13B. As described above, when the driving assistance mode makes transition from the LCA mode to the LKA mode, the LKA target virtual spring reaction force $T_{tb,d\_LKA}(e_l)$ may be set such that the virtual spring reaction force $T_{tb,d\_LKA}(e_l)$ immediately after the transition matches the virtual spring reaction force $k_{md} \cdot \theta_{md}$

immediately before the transition.

Therefore, when the lateral deviation $e_l$ is larger than $-e_{l,q}$ and smaller than $e_{l,q}$, the driving assistance mode is the lane centering assist mode (LCA mode). The first weight W1 is set to 1 and the second weight W2 is set to zero.

When the lateral deviation $e_l$ is equal to or smaller than $-e_{l,q}$ or equal to or larger than $e_{l,q}$, the driving assistance mode is the lane keeping assist mode (LKA mode). The first weight W1 is set to zero and the second weight W2 is set to 1.

In the LCA mode, the addition result Y of the second addition unit 110 is $k_{md} \cdot \theta_{md}$ similarly to the manual steering command value calculation unit 53A in FIG. 12. Therefore, the calculation result Y of the addition/subtraction unit 101 is $T_{tb} + N \cdot T_{as} - c_{md} \cdot d\theta_{md}/dt - k_{md} \cdot \theta_{md}$.

Accordingly, in the LCA mode, the manual steering command value calculation unit 53B calculates the manual steering command value $\theta_{md}$ based on an equation of motion given by the following expression (18) that is the same as the above expression (11).

[Math. 18]

$$ J_{md} \cdot \ddot{\theta}_{md} = T_{tb} + N \cdot T_{as} - c_{md} \cdot \dot{\theta}_{md} - k_{md} \cdot \theta_{md} \quad \cdots (18) $$

That is, in the LCA mode, the manual steering command value calculation unit 53B calculates the manual steering command value $\theta_{md}$ using an equation of motion similar to the above expression (2).

In the LKA mode, the addition result Y of the second addition unit 110 is $(c_{md} \cdot d\theta_{ad}/dt + J_{md} \cdot d^2\theta_{ad}/dt^2 + T_{tb,d\_LKA}(e_l) + N \cdot T_{as})$. Therefore, the calculation result of the addition/subtraction unit 101 is $T_{tb} - c_{md} \cdot d\theta_{md}/dt - c_{md} \cdot d\theta_{ad}/dt - J_{md} \cdot d^2\theta_{ad}/dt^2 - T_{tb,d\_LKA}(e_l)$.

Accordingly, in the LCA mode, the manual steering command value calculation unit 53B calculates the manual steering command value $\theta_{md}$ based on an equation of motion given by the following expression (19).

[Math. 19]

$$ J_{md} \cdot \ddot{\theta}_{md} + J_{md} \cdot \ddot{\theta}_{ad} = T_{tb} - c_{md} \cdot \dot{\theta}_{md} - c_{md} \cdot \dot{\theta}_{ad} - T_{tb,d\_LKA}(e_l) $$
$$ \cdots (19) $$

In the expression (19), $(J_{md} \cdot d^2\theta_{md}/dt^2 + J_{md} \cdot d^2\theta_{ad}/dt^2)$ is the moment of inertia, and $(c_{md} \cdot d\theta_{md}/dt + c_{md} \cdot d\theta_{ad}/dt)$ is the virtual damper reaction force. $T_{tb,d\_LKA}(e_l)$ is the LKA target virtual spring reaction force.

That is, in the LKA mode, the manual steering command value calculation unit 53B calculates the manual steering command value $\theta_{md}$ using $(J_{md} \cdot d^2\theta_{md}/dt^2 + J_{md} \cdot d^2\theta_{ad}/dt^2)$, $(c_{md} \cdot d\theta_{md}/dt + c_{md} \cdot d\theta_{ad}/dt)$, and $T_{tb,d\_LKA}(e_l)$ as the moment of inertia $J_{md} \cdot d^2\theta_{col}/dt^2$, the virtual damper reaction force $c_{md} \cdot d\theta_{col}/dt$, and the virtual spring reaction force $k_{md} \cdot \theta_{col}$ in the above expression (2), respectively, while setting 0 as $N \cdot T_m (= N \cdot T_{as})$ in the equation of motion given by the above expression (2).

The manual steering command value calculation unit 53B may be configured not to provide $N \cdot T_{as}$ to the first addition unit 108. In this case, in the LKA mode, the manual steering command value calculation unit 53B calculates the manual steering command value $\theta_{md}$ based on the equation of motion in which $N \cdot T_{as}$ is added to the right side of the above expression (19).

The second modification provides the same effects as in the above first modification. The second modification further provides an effect that the discomfort felt by the driver can be reduced in the LKA mode. This point will be described below.

Referring to FIGS. 11 and 7, in the cooperative steering mode, the electric motor 18 is controlled such that the actual steering angle $\theta_c$ follows the integrated angle command value $\theta_{cmd}$. Assuming that the actual steering angle $\theta_c$ completely follows the integrated angle command value $\theta_{cmd}$, a relationship of $\theta_{md} = \theta_c - \theta_{ad}$ holds.

In this case, the virtual damper reaction force $c_{md} \cdot d\theta_{md}/dt$ for the manual steering command value $\theta_{md}$ in the above expression (19) is given by the following expression (20).

[Math. 20]

$$ c_{md} \cdot \dot{\theta}_{md} = c_{md} \cdot (\dot{\theta}_c - \dot{\theta}_{ad}) $$
$$ = c_{md} \cdot \dot{\theta}_c - c_{md} \cdot \dot{\theta}_{ad} \quad \cdots (20) $$

The moment of inertia $J_{md} \cdot d^2\theta_{md}/dt^2$ for the manual steering command value $\theta_{md}$ in the above expression (19) is given by the following expression (21).

[Math. 21]

$$J_{md} \cdot \ddot{\theta}_{md} = J_{md} \cdot (\ddot{\theta}_c - \ddot{\theta}_{ad})$$
$$= J_{md} \cdot \ddot{\theta}_c - J_{md} \cdot \ddot{\theta}_{ad} \quad \cdots (21)$$

That is, $c_{md} \cdot d\theta_{md}/dt$ includes an actual steering angle component $c_{md} \cdot d\theta_c/dt$ according to the first derivative of the actual steering angle $\theta_c$, and an automatic steering component $-c_{md} \cdot d\theta_{ad}/dt$ according to the first derivative of the automatic steering command value $\theta_{ad}$. Similarly, $J_{md} \cdot d^2\theta_{md}/dt^2$ includes an actual steering angle component $J_{md} \cdot d^2\theta_c/dt^2$ according to the second derivative of the actual steering angle $\theta_c$, and an automatic steering component $-J_{md} \cdot d^2\theta_{ad}/dt^2$ according to the second derivative of the automatic steering command value $\theta_{ad}$.

The actual steering angle components $c_{md} \cdot d\theta_c/dt$ and $J_{md} \cdot d^2\theta_c/dt^2$ correspond to the driver's behavior. Therefore, the driver does not feel discomfort. The automatic steering components $-c_{md} \cdot d\theta_{ad}/dt$ and $-J_{md} \cdot d^2\theta_{ad}/dt^2$ are not related to the driver's behavior. Therefore, the driver may feel discomfort. Since the absolute value of $-d\theta_{ad}/dt$ is larger than the absolute value of $-d^2\theta_{ad}/dt^2$, the automatic steering component $-c_{mq} \cdot d\theta_{aq}/d\theta$ of the virtual damper reaction force is particularly likely to have an adverse effect on the steering feel.

In the second modification, the equation of motion given by the above expression (19) includes, as the virtual damper reaction force, the virtual damper reaction force $c_{md} \cdot d\theta_{ad}/dt$ for the automatic steering command value $\theta_{ad}$ in addition to the virtual damper reaction force $c_{md} \cdot d\theta_{md}/dt$ for the manual steering command value $\theta_{md}$. The equation of motion given by the above expression (19) includes, as the moment of inertia, the moment of inertia $J_{md} \cdot d^2\theta_{ad}/dt^2$ for the automatic steering command value $\theta_{ad}$ in addition to the moment of inertia $J_{md} \cdot d^2\theta_{md}/dt^2$ for the manual steering command value $\theta_{md}$.

Thus, it is possible to reduce the automatic steering component $-c_{md} \cdot d\theta_{ad}/dt$ included in the virtual damper reaction force $c_{md} \cdot d\theta_{md}/dt$ for the manual steering command value $\theta_{md}$. Similarly, it is possible to reduce the automatic steering component $-J_{md} \cdot d^2\theta_{ad}/dt^2$ included in the moment of inertia $J_{md} \cdot d^2\theta_{md}/dt^2$ for the manual steering command value $\theta_{md}$. Accordingly, the discomfort felt by the driver can be reduced in the LKA mode.

Assuming that a relationship of $\theta_{md} = \theta_c - \theta_{ad}$ holds, the equation of motion given by the expression (19) is as shown in the following expression (22).
[Math. 22]

$$J_{md} \cdot \ddot{\theta}_c = T_{tb} - c_{md} \cdot \dot{\theta}_c - T_{tb,d\_LKA}(e_l) \quad \cdots (22)$$

In this case, the automatic steering component $-c_{md} \cdot d\theta_{ad}/dt$ included in $c_{md} \cdot d\theta_{md}/dt$ is compensated, and only the actual steering angle component $c_{md} \cdot d\theta_c/dt$ for the actual steering angle $\theta_c$ remains. Further, the automatic steering component $-J_{md} \cdot d^2\theta_{ad}/dt^2$ included in $J_{md} \cdot d^2\theta_{md}/dt^2$ is compensated, and only $J_{md} \cdot d^2\theta_c/dt^2$ for the actual steering angle $\theta_c$ remains.

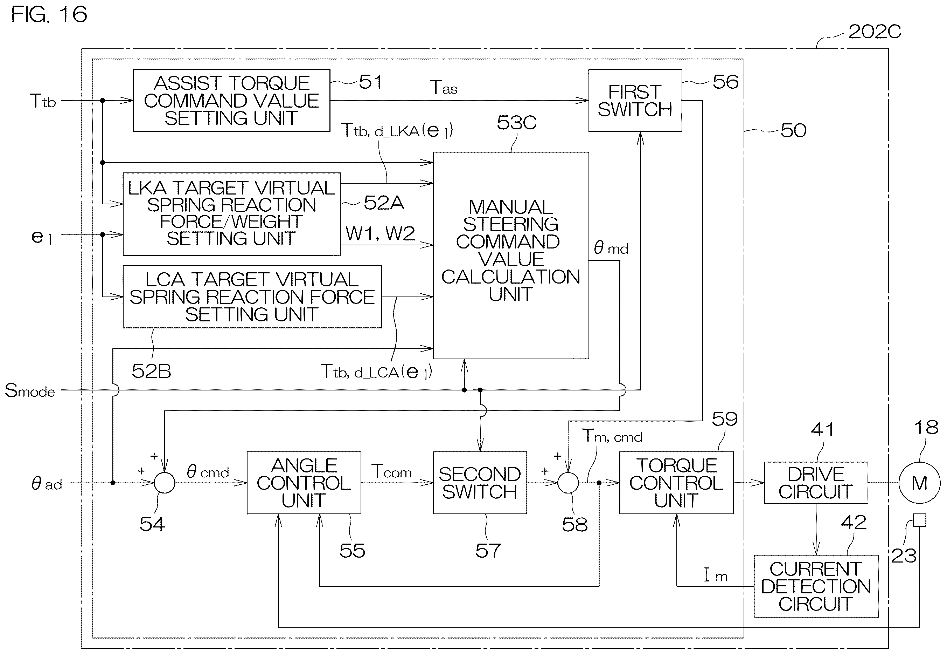

FIG. 16 is a block diagram showing a third modification of the motor control ECU. In FIG. 16, portions corresponding to those in FIG. 11 are represented by the same signs as those in FIG. 11.

A motor control ECU 202C in FIG. 16 is different from the second modification described with reference to FIG. 11 in terms of (1) and (2) below.

(1) The configuration of a manual steering command value calculation unit 53C is different from the configuration of the manual steering command value calculation unit 53B of the second modification (FIG. 15).
(2) An LCA target virtual spring reaction force setting unit 52B for setting an LCA target virtual spring reaction force that is a target virtual spring reaction force for lane centering assist is provided in addition to the LKA target virtual spring reaction force/weight setting unit 52A in FIG. 11.

The torsion bar torque $T_{tb}$, the LKA target virtual spring reaction force $T_{tb,d\_LKA}(e_l)$, the first weight W1, the second weight W2, and the automatic steering command value $\theta_{ad}$ are provided to the manual steering command value calculation unit 53C. An LCA target virtual spring reaction force $T_{tb,d\_LCA}(e_l)$ set by the LCA target virtual spring reaction force setting unit 52B is further provided to the manual steering command value calculation unit 53C. In the third modification, the assist torque command value $T_{as}$ set by the assist torque command value setting unit 51 is not provided to the manual steering command value calculation unit 53C.

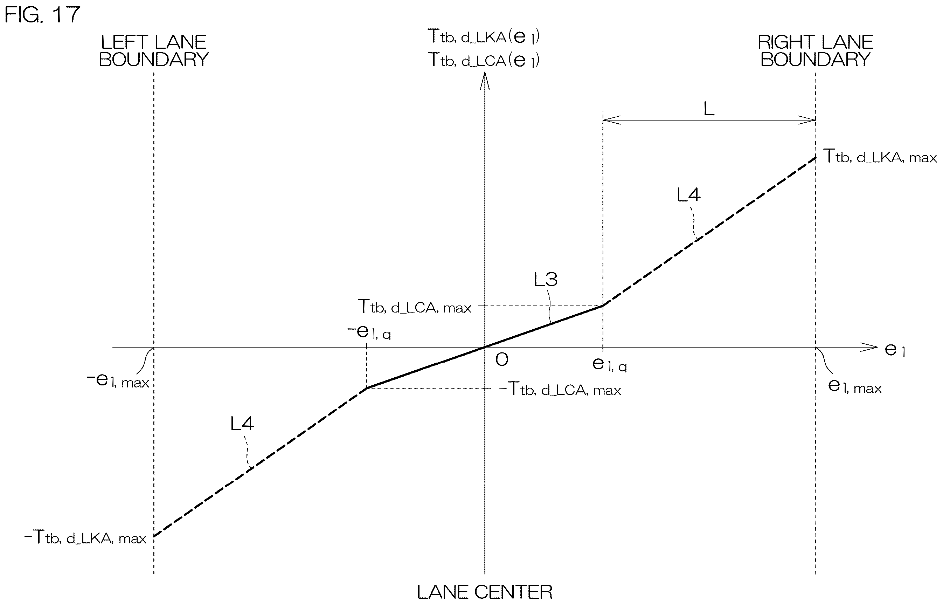

The LCA target virtual spring reaction force setting unit 52B sets the LCA target virtual spring reaction force $T_{tb,d\_LCA}(e_l)$ based on the lateral deviation $e_l$. The continuous line L3 in FIG. 17 is a graph showing an example of setting the LCA target virtual spring reaction force $T_{tb,d\_LCA}(e_l)$ with respect to the lateral deviation $e_l$.

The LCA target virtual spring reaction force $T_{tb,d\_LCA}(e_l)$ is set to 0 in a range in which the lateral deviation $(e_l)$ is larger than $e_{l,q}$ and in a range in which the lateral deviation $(e_l)$ is smaller than $-e_{l,q}$. The LCA target virtual spring reaction force $T_{tb,d\_LCA}(e_l)$ is set to 0 when the lateral deviation $(e_l)$ is 0.

The LCA target virtual spring reaction force $T_{tb,d\_LCA}(e_l)$ is set to a predetermined maximum value $T_{tb,d\_LCA,max}$ when the lateral deviation $(e_l)$ is $e_{l,q}$, and is set to $-T_{tb,d\_LCA,max}$ when the lateral deviation $(e_l)$ is $-e_{l,q}$.

When the lateral deviation $(e_l)$ ranges from 0 to $e_{l,q}$, the LCA target virtual spring reaction force $T_{tb,d\_LCA}(e_l)$ is set to increase from 0 to $T_{tb,d\_LCA,max}$ as the lateral deviation $(e_l)$ increases. When the lateral deviation $e_l$ ranges from 0 to $-e_{l,q}$, the LCA target virtual spring reaction force $T_{tb,d\_LCA}(e_l)$ is set to decrease from 0 to $-T_{tb,d\_LCA,max}$ as the lateral deviation $(e_l)$ decreases. In this example, the LCA target virtual spring reaction force $T_{tb,d\_LCA}(e_l)$ changes linearly, but may change non-linearly.

The reaction force/weight setting unit 52A performs substantially the same operation as that described with reference to FIGS. 13A and 13B. However, the initial arithmetic expression set in step S1 in FIG. 13A is different from the initial arithmetic expression described with reference to FIG. 13A. The other operations of the reaction force/weight setting unit 52A are the same as those described above.

In the present modification, the initial characteristic for determining the LKA target virtual spring reaction force $T_{tb,d\_LKA}(e_l)$ in the LKA mode is as indicated by the dashed line L4 in FIG. 17.

Therefore, an initial arithmetic expression given by the following expression (23) is set in step S1 in FIG. 13A.
[Math. 23]

$$\text{if } e_l \geqq e_{l,q} \text{ then}$$
$$T_{tb,d\_LKA}(e_l) = \{(T_{tb,d\_LKA,max} - T_{tb,d\_LCA,max})/L\} \cdot (e_l - e_{l,q}) + T_{tb,d\_LCA,max}$$
$$\text{if } e_l \leqq -e_{l,q} \text{ then}$$
$$T_{tb,d\_LKA}(e_l) = -\{(-T_{tb,d\_LKA,max} + T_{tb,d\_LCA,max})/L\} \cdot (e_l - e_{l,q}) - T_{tb,d\_LCA,max}$$
$$\cdots (23)$$

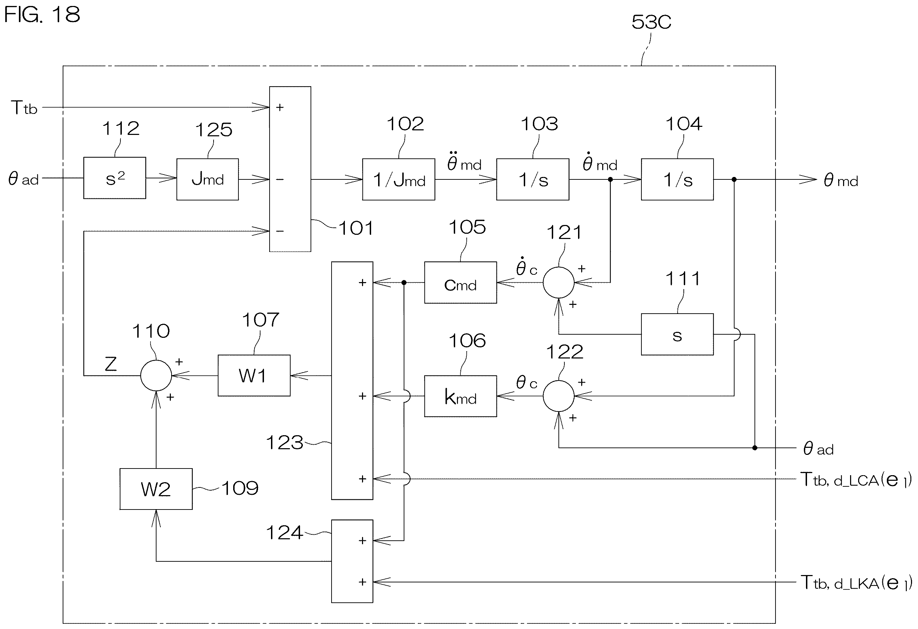

FIG. 18 is a block diagram showing the configuration of the manual steering command value calculation unit 53C. In FIG. 18, portions corresponding to those in FIG. 15 described above are represented by the same signs as those in FIG. 15.

The manual steering command value calculation unit 53C includes the first-order differentiation unit 111, the second-order differentiation unit 112, the addition/subtraction unit 101, the inertia division unit 102, the first integration unit 103, the second integration unit 104, a third addition unit 121, the virtual damper reaction force calculation unit 105, a fourth addition unit 122, the virtual spring reaction force calculation unit 106, a fifth addition unit 123, the first weight multiplication unit 107, a sixth addition unit 124, the second weight multiplication unit 109, the second addition unit 110, and an inertia multiplication unit 125.

The second-order differentiation unit 112 obtains the second derivative of the automatic steering command value $\theta_{ad}$. The inertia multiplication unit 125 calculates a moment of inertia $J_{md} \cdot d^2\theta_{ad}/dt^2$ for the automatic steering command value $\theta_{ad}$ by multiplying the differentiation result $d^2\theta_{ad}/dt^2$ of the second-order differentiation unit 112 by the column inertia $J_{md}$.

The torsion bar torque $T_{tb}$, the moment of inertia $J_{md} \cdot d^2\theta_{ad}/dt^2$ for the automatic steering command value $\theta_{ad}$, and an addition result Z of the second addition unit 110 are provided to the addition/subtraction unit 101.

The addition/subtraction unit 101 subtracts the moment of inertia $J_{md} \cdot d^2\theta_{ad}/dt^2$ for the automatic steering command value $\theta_{ad}$ and Z from the torsion bar torque $T_{tb}$. Therefore, the addition/subtraction unit 101 calculates a moment of inertia $J_{md} \cdot d^2\theta_{md}/dt^2$ ($= T_{tb} - J_{md} \cdot d^2\theta_{ad}/dt^2 - Z$) that corresponds to $J_{md} \cdot d^2\theta_{col}/dt^2$ on the left side of the above expression (2).

The inertia division unit 102 calculates the second derivative $d^2\theta_{md}/dt^2$ of the manual steering command value $\theta_{md}$ by dividing the moment of inertia $J_{md} \cdot d^2\theta_{md}/dt^2$ calculated by the addition/subtraction unit 101 by the column inertia $J_{md}$.

The first integration unit 103 calculates the first derivative $d\theta_{md}/dt$ of the manual steering command value $\theta_{md}$ by integrating the second derivative $d^2\theta_{md}/dt^2$ of the manual steering command value $\theta_{md}$.

The second integration unit 104 calculates the manual steering command value $\theta_{md}$ by integrating the first derivative $d\theta_{md}/dt$ of the manual steering command value $\theta_{md}$. The manual steering command value $\theta_{md}$ is output from the manual steering command value calculation unit 53C.

The first-order differentiation unit 111 obtains the first derivative of the automatic steering command value $\theta_{ad}$. The third addition unit 121 adds the derivative $d\theta_{ad}/dt$ of the automatic steering command value $\theta_{ad}$ to the derivative $d\theta_{md}/dt$ of the manual steering command value $\theta_{md}$.

The virtual damper reaction force calculation unit 105 calculates a virtual damper reaction force $c_{md} \cdot (d\theta_{md}/dt + d\theta_{ad}/dt)$ by multiplying the addition result $(d\theta_{md}/dt + d\theta_{ad}/dt)$ from the third addition unit 121 by the viscous damping coefficient $c_{md}$.

The fourth addition unit 122 adds the automatic steering command value $\theta_{ad}$ to the manual steering command value $\theta_{md}$. The virtual spring reaction force calculation unit 106 calculates a virtual spring reaction force $k_{md} \cdot (\theta_{md} + \theta_{ad})$ by multiplying the addition result $(\theta_{md} + \theta_{ad})$ from the fourth addition unit 122 by the spring constant $k_{md}$.

The fifth addition unit 123 adds the virtual damper reaction force $c_{md} \cdot (d\theta_{md}/dt + d\theta_{ad}/dt)$ calculated by the virtual damper reaction force calculation unit 105, the virtual spring reaction force $k_{md} \cdot (\theta_{md} + \theta_{ad})$ calculated by the virtual spring reaction force calculation unit 106, and the LCA target virtual spring reaction force $T_{tb,d\_LCA}(e_l)$.

The first weight multiplication unit 107 multiplies the addition result $\{c_{md} \cdot (d\theta_{md}/dt + d\theta_{ad}/dt) + k_{md} \cdot (\theta_{md} + \theta_{ad}) + T_{tb,d\_LCA}(e_l)\}$ of the fifth addition unit 123 by the first weight W1.

The sixth addition unit 124 adds the virtual damper reaction force $c_{md} \cdot (d\theta_{md}/dt + d\theta_{ad}/dt)$ calculated by the virtual damper reaction force calculation unit 105 and the LKA target virtual spring reaction force $T_{tb,d\_LKA}(e_l)$.

The second weight multiplication unit 109 multiplies the addition result $\{c_{md} \cdot (d\theta_{md}/dt + d\theta_{ad}/dt) + T_{tb,d\_LKA}(e_l)\}$ of the sixth addition unit 124 by the second weight W2.

The second addition unit 110 adds the calculation result $W1 \cdot \{c_{md} \cdot (d\theta_{md}/dt + d\theta_{ad}/dt) + k_{md} \cdot (\theta_{md} + \theta_{ad}) + T_{tb,d\_LCA}(e_l)\}$ of the first weight multiplication unit 107 and the calculation result $W2 \cdot \{c_{md} \cdot (d\theta_{md}/dt + d\theta_{ad}/dt) + T_{tb,d\_LKA}(e_l)\}$ of the second weight multiplication unit 109. The addition result $[W1 \cdot \{c_{md} \cdot (d\theta_{md}/dt + d\theta_{ad}/dt) + k_{md} \cdot (\theta_{md} + \theta_{ad}) + T_{tb,d\_LCA}(e_l)\} + W2 \cdot \{c_{md} \cdot (d\theta_{md}/dt + d\theta_{ad}/dt) + T_{tb,d\_LKA}(e_l)\}]$ of the second addition unit 110 is fed back as Z to the addition/subtraction unit 101.

In the present modification as well, when the lateral deviation $e_l$ is larger than $-e_{l,q}$ and smaller than $e_{l,q}$, the driving assistance mode is the lane centering assist mode (LCA mode). The first weight W1 is set to 1 and the second weight W2 is set to zero.

When the lateral deviation $e_l$ is equal to or smaller than $-e_{l,q}$ or equal to or larger than $e_{l,q}$, the driving assistance mode is the lane keeping assist mode (LKA mode). The first weight W1 is set to zero and the second weight W2 is set to 1.

In the LCA mode, the addition result Z of the second addition unit 110 is $\{c_{md} \cdot (d\theta_{md}/dt + d\theta_{ad}/dt) + k_{md} \cdot (\theta_{md} + \theta_{ad}) + T_{tb,d\_LCA}(e_l)\}$, Therefore, the calculation result of the addition/subtraction unit 101 is $\{T_{tb} - J_{md} \cdot d^2\theta_{ad}/dt^2 - c_{md} \cdot d\theta_{md}/dt - c_{md} \cdot d\theta_{ad}/dt - k_{md} \cdot \theta_{md} - k_{md} \cdot \theta_{ad} - T_{tb,d\_LCA}(e_l)\}$.

Accordingly, in the LCA mode, the manual steering command value calculation unit 53C calculates the manual steering command value $\theta_{md}$ based on an equation of motion given by the following expression (24).

[Math. 24]

$$J_{md} \cdot \ddot{\theta}_{md} + J_{md} \cdot \ddot{\theta}_{ad} = T_{tb} - c_{md} \cdot \dot{\theta}_{md} - c_{md} \cdot \dot{\theta}_{ad}$$
$$- k_{md} \cdot \theta_{md} - k_{md} \cdot \theta_{ad} - T_{tb, d\_LCA}(e_l)$$

$$\cdots (24)$$

In the expression (24), $(J_{md} \cdot d^2\theta_{md}/dt^2 + J_{md} \cdot d^2\theta_{ad}/dt^2)$ is the moment of inertia, $(c_{md} \cdot d\theta_{md}/dt + c_{md} \cdot d\theta_{ad}/dt)$ is the virtual damper reaction force, and $(k_{md} \cdot \theta_{md} + k_{md} \cdot \theta_{ad} + Tt_{b,d\_LCA}(e_l))$ is the virtual spring reaction force.

That is, in the LCA mode, the manual steering command value calculation unit 53C calculates the manual steering command value $\theta_{md}$ using $(J_{md} \cdot d^2\theta_{md}/dt^2 + J_{md} \cdot d^2\theta_{ad}/dt^2)$, $(c_{md} \cdot d\theta_{md}/dt + c_{md} \cdot d\theta_{ad}/dt)$, and $(k_{md} \cdot \theta_{md} + k_{md} \cdot \theta_{ad} + Tt_{b,d\_LCA}(e_l))$ as the moment of inertia $J_{md} \cdot d^2\theta_{md}/dt^2$, the virtual damper reaction force $c_{md} \cdot \theta_{col}$, and the virtual spring reaction force $k_{md} \cdot \theta_{col}$ in the above expression (2), respectively, while setting 0 as $N \cdot T_m (= N \cdot T_{as})$ in the equation of motion given by the above expression (2).

In the LKA mode, the addition result Z of the second addition unit 110 is $\{c_{md} \cdot (d\theta_{md}/dt + d\theta_{ad}/dt) + Tt_{b,d\_LKA}(e_l)\}$. Therefore, the calculation result of the addition/subtraction unit 101 is $\{T_{tb} - J_{md} \cdot d^2\theta_{ad}/dt^2 - c_{md} \cdot d\theta_{md}/dt - c_{md} \cdot d\theta_{ad}/dt - Tt_{b,d\_LKA}(e_l)\}$.

Accordingly, in the LKA mode, the manual steering command value calculation unit 53C calculates the manual steering command $\theta_{md}$ based on an equation of motion given by the following expression (25) that is the same as the above expression (19).

[Math. 25]

$$J_{md} \cdot \ddot{\theta}_{md} + J_{md} \cdot \ddot{\theta}_{ad} = T_{tb} - c_{md} \cdot \dot{\theta}_{md} - c_{md} \cdot \dot{\theta}_{ad} - T_{tb, d\_LKA}(e_l)$$

$$\cdots (25)$$

In the expression (25), $(J_{md} \cdot d^2\theta_{md}/dt^2 + J_{md} \cdot d^2\theta_{ad}/dt^2)$ is the moment of inertia, and $(c_{md} \cdot d\theta_{md}/dt + c_{md} \cdot d\theta_{ad}/dt)$ is the virtual damper reaction force. $Tt_{b,d\_LKA}(e_l)$ is the LKA target virtual spring reaction force.

That is, in the LKA mode, the manual steering command value calculation unit 53C calculates the manual

steering command value $\theta_{md}$ using $(J_{md} \cdot d^2\theta_{md}/dt^2 + J_{md} \cdot d^2\theta_{ad}/dt^2)$, $(c_{md} \cdot d\theta_{md}/dt + c_{md} \cdot d\theta_{ad}/dt)$, and $Tt_{b,d\_LKA}(e_I)$ as the moment of inertia $J_{md} \cdot d^2\theta_{col}/dt^2$, the virtual damper reaction force $c_{md} \cdot d\theta_{col}/dt$, and the virtual spring reaction force $k_{ma} \cdot \theta_{col}$ in the above expression (2), respectively, while setting 0 as $N \cdot T_m (= N \cdot T_{as})$ in the equation of motion given by the above expression (2).

The manual steering command value calculation unit 53C may calculate $N \cdot T_{as}$ by multiplying the assist torque command value $T_{as}$ by the reduction ratio N, and provide the obtained $N \cdot T_{as}$ to the addition/subtraction unit 101. In this case, the addition/subtraction unit 101 adds $N \cdot T_{as}$ to the torsion bar torque $T_{tb}$, and subtracts the moment of inertia $J_{md} \cdot d^2\theta_{ad}/dt^2$ for the automatic steering command value $\theta_{ad}$ and Z from the addition result.

In this case, in the LCA mode, the manual steering command value calculation unit 53C calculates the manual steering command value $\theta_{md}$ based on the equation of motion in which $N \cdot T_{as}$ is added to the right side of the following expression (24). In the LKA mode, the manual steering command value calculation unit 53C calculates the manual steering command value $\theta_{md}$ based on the equation of motion in which $N \cdot T_{as}$ is added to the right side of the following expression (25).

The third modification provides the same effects as in the above second modification. The third modification further provides an effect that the discomfort felt by the driver can be reduced not only in the LKA mode but also in the LCA mode. This point will be described below.

In the third modification, the equation of motion (24) for calculating the manual steering command value $\theta_{md}$ in the LCA mode includes, as the virtual damper reaction force, the virtual damper reaction force $c_{md} \cdot d\theta_{ad}/dt$ for the automatic steering command value $\theta_{ad}$ in addition to the virtual damper reaction force $c_{md} \cdot d\theta_{md}/dt$ for the manual steering command value $\theta_{md}$.

The equation of motion (24) includes, as the moment of inertia, the moment of inertia $J_{md} \cdot d^2\theta_{ad}/dt^2$ for the automatic steering command value $\theta_{ad}$ in addition to the moment of inertia $J_{md} \cdot d^2\theta_{md}/dt^2$ for the manual steering command value $\theta_{md}$.

The equation of motion (24) further includes, as the virtual spring reaction force, the virtual spring reaction force $k_{md} \cdot d\theta_{ad}/dt$ for the automatic steering command value $\theta_{ad}$ in addition to the virtual spring reaction force $k_{md} \cdot d\theta_{md}/dt$ for the manual steering command value $\theta_{md}$.

Thus, it is possible to reduce the automatic steering component included in the virtual damper reaction force $c_{md} \cdot d\theta_{md}/dt$ for the manual steering command value $\theta_{md}$ also in the LCA mode. Similarly, it is possible to reduce the automatic steering component included in the moment of inertia $J_{md} \cdot d^2\theta_{md}/dt^2$ for the manual steering command value $\theta_{md}$. Further, it is possible to reduce the automatic steering component included in the virtual spring reaction force $k_{md} \cdot d\theta_{md}/dt$ for the manual steering command value $\theta_{md}$. Accordingly, the discomfort felt by the driver can be reduced in the LKA mode and the LCA mode in the third modification.

Although the embodiment and modifications of the present disclosure are described above, the present disclosure may also be implemented in other forms.

In the above embodiment, the spring constant $k_{md}$ in the above expressions (11), (18), (24) is obtained through experiments, analyses, etc. in advance. However, the spring constant $k_{md}$ in the above expressions (11), (18), (21) may be calculated based on the following expression (26) using the estimated disturbance torque value $\square T_{lc}$ calculated by the disturbance torque estimation unit 64 (see FIG. 7) and the actual steering angle $\theta_c$ calculated by the second reduction ratio division unit 70.

[Math. 26]

$$\mathrm{kmd} = \frac{\hat{T}_{lc}}{\theta_c} \quad \cdots (26)$$

In the above embodiment, the viscous damping coefficient $c_{md}$ in the above expressions (3), (11), (12), (18), (19), (24), (25) is obtained through experiments, analyses, etc. in advance.

However, the viscous damping coefficient $c_{md}$ in the above expressions (3), (11), (12), (18), (19), (24), (25) may be calculated based on the following expression (27) using the estimated disturbance torque value $\square T_{lc}$ calculated by the disturbance torque estimation unit 64 and the actual steering angle $\theta_c$ calculated by the second reduction ratio division unit 70.

[Math. 27]

$$\mathrm{cmd} = \frac{\hat{T}_{lc}}{\dot{\theta}_c} \quad \cdots (27)$$

In the above embodiment, the angle control unit 55 (see FIG. 7) includes the feedforward control unit 63. However, the feedforward control unit 63 may be omitted. In this case, the feedback control torque $T_{fb}$ calculated by the feedback control unit 62 is basic target torque.

The above embodiment illustrates the example in which the present disclosure is applied to motor control for a column type EPS. However, the present disclosure is also applicable to motor control for an EPS other than the column type. The present disclosure is also applicable to control on an electric motor for steered angle control of a steer-by-wire system.

Although the embodiment of the present disclosure is described in detail above, this is merely a specific example used to clarify the technical content of the present disclosure. The present disclosure should not be construed as being limited to the specific example, and the scope of the present disclosure is limited only by the appended claims.

Description of the Reference Numerals

1 ... electric power steering system, 3 ... steered wheel, 4 ... steering operation mechanism, 18 ... electric motor, 51 ... assist torque command value setting unit, 52 ... target virtual spring reaction force setting unit, 52A ... LKA target virtual spring reaction force/weight setting unit, 52B ... LCA target virtual spring reaction force setting unit, 53, 53A, 53B, 53C ... manual steering command value calculation unit, 54 ... integrated angle command value calculation unit, 55 ... angle control unit, 56 ... first switch, 57 ... second switch, 58 ... addition unit, 59 ... torque control unit, 201 ... higher-level ECU, 202, 202A, 202B, 202C ... motor control ECU

**Claims**

1. A motor control device that controls drive of an electric motor of a steering device, the motor control device comprising:

   a manual steering command value calculation unit that calculates a manual steering command value using torsion bar torque;
   an integrated angle command value calculation unit that calculates an integrated angle command value by adding the manual steering command value to an automatic steering command value for driving assistance; and
   a control unit that controls the drive of the electric motor based on the integrated angle command value, wherein the manual steering command value calculation unit is configured to, in a driving assistance mode, calculate the manual steering command value using an equation of motion of a reference model of the steering device, and the manual steering command value calculation unit calculates the manual steering command value using a target virtual spring reaction force according to a lateral position for a reference vehicle position relative to a travel lane as a virtual spring reaction force in the equation of motion at least under a predetermined condition.

2. The motor control device according to claim 1, wherein when the driving assistance mode is a lane keeping assist mode for assisting in steering such that a vehicle stays within the travel lane, the manual steering command value calculation unit calculates the manual steering command value using the target virtual spring reaction force according to the lateral position for the reference vehicle position relative to the travel lane as the virtual spring reaction force in the equation of motion.

3. The motor control device according to claim 2, wherein:

   the driving assistance mode includes the lane keeping assist mode and a driving mode different from the lane keeping assist mode; and
   when transition is made from the driving mode different from the lane keeping assist mode to the lane keeping assist mode, the target virtual spring reaction force is set to match torsion bar torque immediately before the transition is made from the different driving mode to the lane keeping assist mode.

4. The motor control device according to claim 3, wherein:

   the different driving mode is a lane centering assist mode for assisting in steering such that the vehicle travels at a center of the travel lane;
   when the reference vehicle position is within a range of a predetermined distance from the center of the travel lane, the driving mode is set to the lane centering assist mode;
   when the reference vehicle position is outside the range of the predetermined distance from the center of the travel lane, the driving mode is set to the lane keeping assist mode;

in the lane centering assist mode, the manual steering command value calculation unit calculates the manual steering command value using a virtual spring reaction force that is set using a spring constant of a virtual spring as the virtual spring reaction force in the equation of motion; and

when transition is made from the lane centering assist mode to the lane keeping assist mode, the target virtual spring reaction force in the transition is set to match torsion bar torque immediately before the transition.

FIG. 1

EP 4 734 360 A1

FIG. 2

EP 4 734 360 A1

FIG. 3

ASSIST TORQUE
COMMAND VALUE($T_{as}$)

⟨LEFT⟩

O

⟨RIGHT⟩
TORSION BAR
TORQUE ($T_{tb}$)

EP 4 734 360 A1

FIG. 4

LEFT LANE
BOUNDARY

RIGHT LANE
BOUNDARY

$T_{tb, d}(e_l)$

$T_{tb, d, m}$

$T_{tb, d, s}$

$-e_{l, m}$

$-e_{l, s}$

$O$

$e_{l, s}$

$e_{l, m}$

$e_l$

$-T_{tb, d, s}$

$-T_{tb, d, m}$

LANE CENTER

FIG. 5

$T_{tb}$ $\qquad$ $N \cdot T_m$

Lower column

$J_{md}$ , $\theta_{col}$

$C_{md}$ $\qquad$ $k_{md}$

FIG. 6

FIG. 7

FIG. 8

FIG. 9

FIG. 10

Block diagram:

Tm,cmd → MOTOR CURRENT COMMAND VALUE CALCULATION UNIT (91) → Im,cmd → (+/−) (92) → PI CONTROL UNIT (93) → PWM CONTROL UNIT (94) → DRIVE CIRCUIT (41) → CURRENT DETECTION CIRCUIT (42) → Im (feedback)

59

EP 4 734 360 A1

FIG. 11

EP 4 734 360 A1

FIG. 12

FIG. 13A

START

S1 | F=0, W1=1, W2=0, AND SET INITIAL ARITHMETIC EXPRESSION (13)

(b)

S2 | $-e_{l,q} < e_l < e_{l,q}$ ? — NO → (a path)
YES

S3 | F = 1

S4 | W1 = 1, W2 = 0

S5 | $T_{tb, d\_LKA}(e_l) = 0$

S6 | $T_{tb, before} = T_{tb}$

S7 | $e_l \geqq e_{l,q}$ ? — NO → (a)
YES

S8 | F = 1 ? — NO →
YES

S9 | F = 0

S10 | W1 = 0, W2 = 1

S11 | $T_{tb, d\_LKA}(e_l) = T_{tb, before}$

S12 | UPDATE ARITHMETIC EXPRESSION TO EXPRESSION (14)

S13 | W1 = 0, W2 = 1

S14 | SET $T_{tb, d\_LKA}(e_l)$ USING ARITHMETIC EXPRESSION

FIG. 13B

a

S15 — $F = 1$ ? — NO

YES

S16 — $F = 0$

S17 — $W1 = 0, W2 = 1$

S18 — $T_{tb, d\_LKA}(e_1) = T_{tb, before}$

S19 — UPDATE ARITHMETIC EXPRESSION TO EXPRESSION (15)

S20 — $W1 = 0, W2 = 1$

S21 — SET $T_{tb, d\_LKA}(e_1)$ USING ARITHMETIC EXPRESSION

b

FIG. 14

EP 4 734 360 A1

FIG. 15

EP 4 734 360 A1

FIG. 16

FIG. 17

EP 4 734 360 A1

FIG. 18

## INTERNATIONAL SEARCH REPORT

| International application No. |
|---|
| **PCT/JP2023/023081** |

| A. CLASSIFICATION OF SUBJECT MATTER |
|---|
| *H02P 29/20*(2016.01)i<br>FI:  H02P29/20 |
| According to International Patent Classification (IPC) or to both national classification and IPC |

| B. FIELDS SEARCHED |
|---|
| Minimum documentation searched (classification system followed by classification symbols)<br>    H02P29/20 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X | WO 2023/079765 A1 (JTEKT CORP.) 11 May 2023 (2023-05-11)<br>    paragraphs [0008]-[0169], fig. 1-13 | 1-4 |
| A | JP 2020-49962 A (JTEKT CORP.) 02 April 2020 (2020-04-02)<br>    paragraphs [0011]-[0061], fig. 1-14 | 1-4 |
| A | JP 2016-64799 A (MITSUBISHI ELECTRIC CORPORATION) 28 April 2016 (2016-04-28)<br>    paragraph [0032] | 1-4 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/023081**

| Patent document cited in search report | Publication date (day/month/year) | Patent family member(s) | Publication date (day/month/year) |
|---|---|---|---|
| WO 2023/079765 A1 | 11 May 2023 | (Family: none) | |
| JP 2020-49962 A | 02 April 2020 | US 2020/0094870 A1 paragraphs [0028]-[0078], fig. 1-14 EP 3626580 A1 | |
| JP 2016-64799 A | 28 April 2016 | (Family: none) | |

Form PCT/ISA/210 (patent family annex) (January 2015)

**EP 4 734 360 A1**

**Patent documents cited in the description**

- WO 2023286169 A